# EUROPÄISCHE PATENTSCHRIFT

(11) **EP 4 142 972 B1**
(45) Veröffentlichungstag und Bekanntmachung des Hinweises auf die Patenterteilung: **14.08.2024**
(21) Anmeldenummer: 21721890.8
(22) Anmeldetag: 22.04.2021
(51) Int. Cl.: B22F 10/20, B65H 75/36, B33Y 30/00, B22F 12/50, B22F 10/25

(54) **WERKZEUGMASCHINE MIT KABELFÜHRUNGSVORRICHTUNG**
MACHINE TOOL HAVING CABLE GUIDE APPARATUS
MACHINE-OUTIL ÉQUIPÉE D'UN DISPOSITIF DE GUIDAGE DE CÂBLE

(30) Priorität: 30.04.2020 DE 102020205565
(43) Veröffentlichungstag der Anmeldung: 08.03.2023
(73) Patentinhaber: DMG MORI Ultrasonic Lasertec GmbH, 55758 Stipshausen (DE)
(72) Erfinder: HIEPP, Ludwig, 87488 Betzigau (DE); ABT, Andreas, 87466 Oy-Mittelberg (DE)
(74) Vertreter: MERH-IP Matias Erny Reichl Hoffmann Patentanwälte PartG mbB
(86) Internationale Anmeldenummer: PCT/EP2021/060505
(87) Internationale Veröffentlichungsnummer: WO 2021/219483

(56) Entgegenhaltungen:
- DE-U1- 202019 102 323
- US-A- 5 961 156
- US-A1- 2012 037 274

## Beschreibung

### Technisches Gebiet

Die vorliegende Erfindung betrifft eine Werkzeugmaschine mit Kabelführungsvorrichtung für ein Anschlusskabel eines kabelgebundenen Werkzeugs sowie eine Kabelführungsvorrichtung zur Führung eines flexiblen Anschlusskabels.

### Hintergrund der Erfindung

Aus dem Stand der Technik sind numerisch gesteuerte Werkzeugmaschinen bekannt, die mit Hilfe ein oder mehrerer steuerbarer Maschinenachsen ein Werkzeug und ein von diesem zu bearbeitendes Werkstück zueinander positionieren, wobei es sich bei dem Werkzeug um ein kabelgebundenes Werkzeug handeln kann, welches über ein Anschlusskabel mit für die Bearbeitung essentiellen Materialien versorgt wird und/oder mit einer externen Energieversorgung verbunden ist.

Im Falle komplexerer Bearbeitungszentren, stellt ein solch kabelgebundenes Werkzeug meist nur eines der Werkzeugmaschine zur Verfügung stehenden Werkzeug dar, weswegen die über das Anschlusskabel erfolgende Versorgung in der Regel nicht über fest eingebaute, starr ausgeführte Zuleitungen erfolgt, sondern durch das direkt mit dem Werkzeug verbundenen Anschlusskabel, welches in diesem Kontext oft auch als Schleppkabel oder Kabelschlepp bezeichnet wird.

Solche Anschlusskabel sind in der Regel flexibel ausgeführt und weisen eine entsprechende Länge sowie Bewegungsfreiheit auf, um während eines Bearbeitungsvorgangs den durch die Werkzeugmaschine gesteuerten Bewegungen des kabelgebundene Werkzeug zu folgen.

Derartig lange Anschlusskabel können jedoch unhandlich sein und sollten deswegen bei Bewegungen des kabelgebundenen Werkzeugs so geführt werden, dass keine Knickgefahr für das in der Regel dafür besonders anfällige Anschlusskabel besteht und dass dieses weiterhin die eigentliche Bearbeitung nicht behindert, beispielsweise durch eine Kollision mit Maschinenteilen der Werkzeugmaschine.

Daher werden besagte Anschlusskabel mit dafür ausgelegten Vorrichtungen vorgespannt um ein gewisses Maß an Zugkraft im Anschlusskabel zu gewährleisten und damit z.B. eine durch Eigengewicht bedingte Durchbiegung oder Probleme beim Auf- bzw. Abwickeln des Anschlusskabels zu reduzieren.

Aus dem Stand der Technik bekannte Lösungen verwenden für derartige Zwecke einen federbasierten Rückzug, eine Federzugtrommel oder auch ein Spanngewicht.

So wird in der Patentanmeldung US 2012/037274 A1 eine laserbasierte Werkzeugmaschine zur Holzbearbeitung offenbart, die ein System zur Führung und zum Spannen eines flexibel ausgeführten Anschlusskabels aufweist. Um den Bewegungen des als Laserkopf ausgeführten Werkzeugs zu folgen und dabei ein Kräuseln des Anschlusskabels zu verhindern, verläuft dieses über eine Reihe von Umlenkrollen, von denen einige dazu ausgeführt sind, über Federrückzuge eine Vorspannung auf das Anschlusskabel aufzubringen.

Außerhalb des Bereichs von Werkzeugmaschinen findet sich zudem im Gebrauchsmuster DE 20 2019 102323 U1 ein System zur Rückzugsführung eines Anschlusskabels für ein Elektrofahrzeug, wobei das System mehrere Umlenkrollen aufweist und das darin verlaufende Anschlusskabel durch ein als Hebel ausgeführtes Spanngewicht vorgespannt wird.

Ein Problem einer Werkzeugmaschine mit derartiger Kabelführungen ist jedoch, dass eine über mehrere Umlenkrollen verlaufende Führung meist viel des wertvollen Bauraums der Werkzeugmaschine in Anspruch nimmt und die Vorspannung des Anschlusskabels nur unzureichend eingestellt werden kann, besonders im Hinblick auf verschiedene anwendungsbedingte Auslenkungszustände bzw. Verschiebungen des mit dem Werkzeug verbundenen Kabelendes.

### Zusammenfassung der Erfindung

Eine Aufgabe der vorliegenden Erfindung ist es daher, eine Werkzeugmaschine mit einer platzsparenden Vorrichtung zur Kabelführung des Anschlusskabels eines kabelgebundenen Werkzeugs bereitzustellen und dabei eine auf verschiedene Auslenkungszustände des Werkzeugs angepasste Vorspannung des Anschlusskabels zu gewährleisten.

Zur Lösung dieser Aufgabe wird eine numerisch gesteuerte Werkzeugmaschine mit einer Kabelführungsvorrichtung nach Anspruch 1 vorgeschlagen. Ferner wird eine zur Führung eines flexibel ausgeführten Anschlusskabels ausgebildete Kabelführungsvorrichtung nach Anspruch 18 vorgeschlagen.

Die jeweiligen abhängigen Ansprüche beziehen sich dabei auf bevorzugte Ausführungsformen der erfindungsgemäßen Vorrichtung, die jeweils für sich genommen oder in Kombination bereitgestellt werden können.

Gemäß eines ersten Aspekts der Erfindung wird eine numerisch gesteuerte Werkzeugmaschine mit Kabelführungsvorrichtung zur Bereitstellung und Führung eines flexiblen Anschlusskabels eines kabelgebundenen Werkzeugs bereitgestellt. Die Werkzeugmaschine umfasst zumindest eine Bearbeitungseinrichtung, die dazu ausgebildet ist, das kabelgebundene Werkzeug aufzunehmen sowie ein oder mehrere numerisch gesteuerte Maschinenachsen, die dazu ausgebildet sind, die Bearbeitungseinrichtung und ein zu bearbeitendes Werkstück relativ zueinander zu positionieren. Die Kabelführungsvorrichtung der Werkzeugmaschine umfasst eine erste Führungsvorrichtung, einen in der ersten Führungsvorrichtung verschiebbar geführten Schlitten, eine erste Umlenkrolle, die drehbar mit dem Schlitten verbunden ist, ein erstes Spanngewicht G₁ sowie eine Seilzugvorrichtung, die das erste Spanngewicht G₁ mit dem in der ersten Führungsvorrichtung geführten Schlitten verbindet, wobei das flexible Anschlusskabel über die erste Umlenkrolle läuft und das kabelgebundene Werkzeug mit einer Anschlussvorrichtung der Werkzeugmaschine verbindet. Die Kabelführungsvorrichtung umfasst weiterhin ein zweites Spanngewicht G₂ und eine zweite Führungsvorrichtung, in der die Spanngewichte G₁ und G₂ jeweils verschiebbar geführt sind. Die Kabelführungsvorrichtung ist derart ausgebildet, dass das über die erste Umlenkrolle laufende Anschlusskabel in einem ersten Verschiebungsbereich des kabelgebundenen Werkzeugs von einer durch die Gewichtskraft von Spanngewicht G₁ erzeugten Kraft vorgespannt wird und in einem zweiten Verschiebungsbereich des kabelgebundenen Werkzeugs von einer durch eine Summe der Gewichtskräfte von Spanngewicht G₁ und Spanngewicht G₂ erzeugten Kraft vorgespannt wird.

Das kabelgebundene Werkzeug kann von der Bearbeitungseinrichtung der Werkzeugmaschine aufgenommen werden und von dieser über numerisch gesteuerte Maschinenachsen verfahren werden, um dieses gegenüber dem zu bearbeitenden Werkstück zu platzieren. Das flexibel ausgeführte Anschlusskabel ist an einem festen Ende mit der Anschlussvorrichtung der Werkzeugmaschine verbunden und das andere freie Ende ist mit dem kabelgebundenen Werkzeug verbunden. Die flexible Ausführung des Anschlusskabels gestattet es, das kabelgebundene Werkzeug durch die Bearbeitungseinrichtung zu verfahren und dabei die über das Anschlusskabel hergestellte Verbindung zur Anschlussvorrichtung der Werkzeugmaschine aufrecht zu erhalten. Bei dem flexibel ausgeführten Anschlusskabel kann es sich um ein Schleppkabel oder auch einen Kabelschlepp zur Verbindungsherstellung zweier zueinander beweglicher Maschinenteile hier der Anschlussvorrichtung und des Werkzeug, handeln.

Die Anschlussvorrichtung der Werkzeugmaschine stellt für den Betrieb des kabelgebundenen Werkzeugs notwendige Materialien und/oder Medien und/oder Signale bereit, die über das mit der Anschlussvorrichtung verbundene Anschlusskabel zum und/oder vom kabelgebundenen Werkzeug gefördert werden. Die durch das Anschlusskabel geförderten Materialien und/oder Medien und/oder Signale können hierbei elektrisch, optisch oder materiell in Form von festen, flüssigen oder gasförmigen Substanzen sein. Die Verbindung kann vorzugsweise bidirektional ausgeführt sein, sodass nicht nur eine Förderung besagter Materialien und/oder Medien und/oder Signale von der Anschlussvorrichtung zum kabelgebundenen Werkzeug sondern auch vom Werkzeug zur Anschlussvorrichtung möglich ist. Als Beispiele hierfür seien Absaugvorrichtungen, die bei der Bearbeitung entstehende Partikel und/oder Gase absaugen und zur Anschlussvorrichtung führen, genannt oder aber die Übertragung von elektrischen Signalen einer zusätzlich am Werkzeug angebrachten Sensoreinrichtung.

Zu den zentralen Anforderungen der erfindungsgemäßen Werkzeugmaschine mit kabelgebundenem Werkzeug zählt die Bereitstellung und Führung des beschriebenen Anschlusskabels. Das Kabel muss eine entsprechende Vorspannung aufweisen, um problemfrei über die erste Umlenkrolle geführt werden zu können, ohne sich dabei zu kräuseln oder zu verkeilen. Zeitgleich gewährleistet eine entsprechende Vorspannung eine Reduktion der durch das Eigengewicht des Anschlusskabels bedingten Durchbiegung, die unter Umständen eine Bearbeitung unnötig behindern würde. Beide dieser Punkte werden im Falle der erfindungsgemäßen Werkzeugmaschine zuverlässig verhindert, da durch die Kabelführungsvorrichtung zwei Verschiebungsbereiche bereitgestellt werden, in denen das Anschlusskabel jeweils durch zwei in der Regel konstante aber unterschiedlich große Kräfte vorgespannt wird. Im Gegensatz zu einer federrückzugbasierten Vorspannung können so in vorteilhafter Weise weitestgehend konstant bleibende Vorspannungen im Anschlusskabel realisiert werden. Dies gestaltet sich nicht nur im Hinblick auf die Materialbelastung des Anschlusskabels vorteilhaft sondern auch auf die Bearbeitungsgenauigkeit der Werkzeugmaschine, da während der Bearbeitung lediglich eine weitestgehend konstante durch das Anschlusskabel auf die Bearbeitungseinrichtung wirkende Rückzugskraft bei der Steuerung der Werkzeugmaschine zu berücksichtigen ist.

Durch eine Verschiebung des Werkzeugs innerhalb des ersten Verschiebungsbereichs wird das Anschlusskabel über die erste Umlenkrolle abgerollt und führt über die Seilzugvorrichtung zu einer Verschiebung des ersten Spanngewichts G₁ in der zweiten Führungsvorrichtung. In diesem Bereich erfolgt die Vorspannung des Anschlusskabels mit Hilfe der über die Seilzugvorrichtung übertragenen Gewichtskraft des ersten Spanngewichts G₁.

Die im ersten Verschiebungsbereich durch das erste Spanngewicht G₁ bewirkte Vorspannung des Anschlusskabels kann als Grundvorspannung in einem Ausgangszustand eingesetzt werden, in dem sich das kabelgebundene Werkzeug beispielsweise in einer Ruheposition befindet und zu diesem Zeitpunkt nicht zur Bearbeitung des Werkstücks eingesetzt wird. Diese Grundvorspannung gewährleistet eine durchweg gleichmäßige Vorspannung im Anschlusskabel in genannter Ruheposition, ohne das Anschlusskabel dabei unnötig stark durch eine zu hohe Vorspannung zu belasten oder ein Verkippen des Werkzeugs in der Ruheposition zu verhindern. Die materielle Belastung des Anschlusskabel kann in dieser Position vergleichsweise gering gehalten werden, um so die Lebensdauer des Anschlusskabels und/oder dessen Verbindungselemente zur Anschlussvorrichtung der Werkzeugmaschine bzw. des Werkzeugs nicht unnötig zu reduzieren.

Mit Eintritt der Verschiebung des kabelgebundenen Werkzeugs in den zweiten Verschiebungsbereich führt eine Verschiebung des Werkzeugs zu einem Abrollen des Anschlusskabels über die erste Umlenkrolle, wobei über die Seilzugvorrichtung sowohl das erste Spanngewicht G₁ als auch das zweite Spanngewicht G₂ in der zweiten Führungsvorrichtung verschoben werden. Als Resultat erfolgt in diesem Bereich die Vorspannung des Anschlusskabels mit Hilfe der über die Seilzugvorrichtung übertragenen Summe der Gewichtskräfte des ersten Spanngewichts G₁ und des zweiten Spanngewichts G₂.

Die zweite Führungsvorrichtung ist dabei derart ausgeführt, dass beim Übergang vom ersten in den zweiten Verschiebungsbereich, zusätzlich die Gewichtskraft des zweiten Spanngewichts G₂ beginnt, über die Seilzugvorrichtung auf die Vorspannung des Anschlusskabels zu wirken.

Die zusätzliche durch die Gewichtskraft des zweiten Spanngewichts G₂ bedingte Vorspannung des Anschlusskabels im zweiten Verschiebungsbereich kann in vorteilhafter Weise während Bearbeitungsvorgängen mit von der Bearbeitungseinrichtung aufgenommenem kabelgebundenem Werkzeug eingesetzt werden. Der zweite Verschiebungsbereich ist daher an während Bearbeitungsvorgängen üblich auftretende Verschiebungen des kabelgebunden Werkzeugs aus dessen Ruheposition heraus angepasst. So kann beispielsweile eine durch das Eigengewicht bedingte, groß ausfallende Durchbiegung des Anschlusskabels durch die mit Hilfe beider Spanngewichte G₁ und G₂ bewirkten Vorspannung stark reduziert werden.

Weiterhin erweist sich die erfindungsgemäße Werkzeugmaschine mit Kabelführungsvorrichtung dahingehend als besonders vorteilhaft, dass die Kabelführung, beispielsweise im Gegensatz zu der in Patentanmeldung US 2012/037274 A1 gezeigten Ausführung mit mehreren Umlenkrollen, das Kabel lediglich über die erste Umlenkrolle vorspannt, sodass eine wesentlich platzsparendere Ausführung ermöglicht wird. Gerade im Rahmen einer industriellen Massenfertigung, bei welcher der Stellplatz für Werkzeugmaschinen beschränkt ist, gestaltet sich eine solche Einsparung als äußerst vorteilhaft. Weiterhin können je nach Beschaffenheit des Anschlusskabels in einfacher Weise die Massen der beiden Spanngewichte G₁ und G₂, z.B. durch einen Austausch der Spanngewichte, auf die Anforderungen des Anschlusskabels angepasst werden, um so eine optimale Führung und Vorspannung des Anschlusskabel zu gewährleisten, ohne dessen Material zu stark zu belasten.

Die erste und/oder die zweite Führungsvorrichtung können in vorteilhafter Weise als Linearführungen mit zwei parallel laufenden Führungsschienen ausgeführt sein. Dies ermöglicht eine platzsparende und kostengünstige Ausführung.

In einer besonders bevorzugten Ausführungsform weist die zweite Führungsvorrichtung eine Anschlagvorrichtung AG₁ für das erste Spanngewicht G₁ und eine Anschlagvorrichtung AG₂ für das zweite Spanngewicht G₂ auf, die Ausgangspositionen der Spanngewichte G₁ und G₂ bezüglich der zweiten Führungsvorrichtung festlegen und damit den ersten und den zweiten Verschiebungsbereich definieren.

Die Anschlagvorrichtungen AG₁ und AG₂ definieren Ausgangspositionen, aus denen heraus die Spanngewichte G₁ und G₂ durch eine Verschiebung des kabelgebundenen Werkzeugs heraus über die Seilzugvorrichtung verschoben werden. Die Anschlagvorrichtungen bestimmen dabei die beiden Verschiebungsbereiche sowie deren Übergangspunkt. Die Anschlagvorrichtungen können in vorteilhafter Weise lösbar mit der zweiten Führungsvorrichtung verbunden sein, sodass eine nachträgliche Justierung bzw. Anpassung des ersten und des zweiten Verschiebungsbereichs ermöglicht wird.

In einer besonders bevorzugten Ausführungsform handelt es sich bei dem kabelgebundenen Werkzeug um ein kabelgebundenes Laserwerkzeug zur laserbasierten Bearbeitung.

In einer besonders bevorzugten Ausführungsform ist das kabelgebundene Laserwerkzeug zur additiven Laserbearbeitung ausgeführt und das Anschlusskabel des kabelgebundenen Laserwerkzeugs weist im Inneren zumindest eine oder mehrere Zuleitungen für Pulvergemische zur additiven Laserbearbeitung und eine Leitungsfaser zur Laserführung auf.

Kabelgebundene Werkzeuge kommen besonders bei der laserbasierten Bearbeitung von Werkstücken zum Einsatz, wobei sich die erfindungsgemäße Werkzeugmaschine mit Kabelführung besonders vorteilhaft für den Einsatz eines Laserwerkzeugs zur additiven Laserbearbeitung eignet. Die hochsensible Zuleitung, welche die für die Bearbeitung wesentlichen Materialien fördert sowie den Laser führt, kann zuverlässig über eine geringe Anzahl von Umlenkungen von der Anschlussvorrichtung der Werkzeugmaschine bis hin zum Werkzeug geführt werden. Dabei erfolgt die Führung des Lasers zum Laserwerkzeug üblicherweise über einen faserbasierten Lichtwellenleiter.

In einer besonders bevorzugten Ausführungsform ist die Kabelführungsvorrichtung derart ausgeführt, dass ein Biegeradius des Anschlusskabels einen kabelspezifischen minimalen Biegeradius nicht unterschreitet.

Gerade in Bezug auf ein Anschlusskabel für ein Werkzeug zur additiven Laserbearbeitung gestaltet sich diese Ausführung als besonders vorteilhaft, da die im Inneren des Anschlusskabels verlaufenden Zuleitungen durch Einhalten eines minimalen Biegeradius nicht durch Knicken beschädigt werden können.

Für einen solchen Einsatzfall liegen Werte des minimalen Biegeradius des Anschlusskabels üblicherweise zwischen 150mm und 300mm.

In einer besonders bevorzugten Ausführungsform weist die Werkzeugmaschine einen für Bearbeitungen am Werkstück ausgebildeten Arbeitsraum und einen an eine Seite des Arbeitsraums angrenzenden Kabelführungsraum auf, wobei der Kabelführungsraum und der Arbeitsraum durch eine mit einer Öffnung versehenen Trennwand voneinander abgetrennt sind und die im Kabelführungsraum angeordnete Kabelführungsvorrichtung dazu ausgebildet ist, das Anschlusskabel durch die Öffnung der Trennwand in den Arbeitsraum zu führen.

Der Kabelführungsraum ist vorteilhafter Weise an einer Seite der Werkzeugmaschine getrennt vom Arbeitsraum angeordnet. So kann die Kabelführungsvorrichtung in vorteilhafterweise von außerhalb der Werkzeugmaschine, also nicht über den Arbeitsraum, zugänglich gemacht werden, um beispielsweise Wartungsarbeiten zu vereinfachen. Die räumliche Trennung der im Arbeitsraum erfolgenden Bearbeitungen und der Kabelführung des Anschlusskabels im Kabelführungsraum gestaltet sich dahingehend vorteilhaft, dass bei der Bearbeitung anfallende Verunreinigungen, z.B. in Form von Pulverpartikeln oder Materialspänen, nicht in die Kabelführungsvorrichtung gelangen und diese beschädigen.

Die Trennwand mit der eingebrachten Öffnung ist vorzugsweise so zu gestalten, dass diese die Bewegungen des Anschlusskabels nicht behindert und zeitgleich die Möglichkeit des Eindringens von Verunreinigungen in den Kabelführungsraum minimiert.

In einer besonders bevorzugten Ausführungsform weist die Werkzeugmaschine weiterhin eine an der Öffnung der Trennwand angeordnete steuerbare Klappe auf, die dazu ausgebildet ist, die Öffnung der Trennwand zu verschließen und zu öffnen.

Ergänzend zu der Trennwand zwischen Kabelführungsraum und Arbeitsraum kann so ein zuverlässiger Schutz der Kabelführungsvorrichtung erreicht werden. Die oben beschriebene Ruheposition des kabelgebundenen Werkzeugs kann in diesem Fall derart festgelegt werden, dass diese sich innerhalb des Kabelführungsraums befindet. Im Falle einer Nichtverwendung des kabelgebundenen Werkzeugs kann dieses samt Anschlusskabel komplett im Kabelführungsraum angeordnet sein und durch ein Verschließen der Öffnung durch die steuerbare Klappe vollständig vom Arbeitsraum abgetrennt werden.

In einer besonders bevorzugten Ausführungsform umfasst die Kabelführungsvorrichtung weiterhin eine zweite Umlenkvorrichtung, die dazu eingerichtet ist, das von der Anschlussvorrichtung kommende, über die erste Umlenkrolle laufende Anschlusskabel durch die Öffnung der Trennwand in den Arbeitsraum zu führen.

Die zweite Umlenkvorrichtung ermöglicht es in vorteilhafter Weise einen konstanten Kontaktbereich zwischen Anschlusskabel und erster Umlenkrolle zu gewährleisten und darüber hinaus eine gewisse Bewegungsfreiheit des Anschlusskabels im Arbeitsraum zu ermöglichen. Die zweite Umlenkvorrichtung ist in vorteilhafter Weise dazu ausgebildet, Bewegungen des Anschlusskabels nicht nur in Kabelrichtung zu ermöglichen, sodass die für die Verwendung des kabelgebundenen Werkzeugs notwendigen Bewegungen des Anschlusskabels erfolgen können, ohne eine Verdrehen oder Verkeilen des Anschlusskabels gerade im Bereich der ersten Umlenkrolle zu riskieren.

In einer besonders bevorzugten Ausführungsform umfasst die Werkzeugmaschine weiterhin eine Ablagestation, die dazu ausgebildet ist, das kabelgebundene Werkzeug aufzunehmen.

In einer besonders bevorzugten Ausführungsform ist die Ablagestation für das kabelgebundene Werkzeug verfahrbar gestaltet und darüber hinaus dazu eingerichtet, durch die Öffnung der Trennwand zwischen einer Ablageposition P0 im Kabelführungsraum und einer Übergabeposition P1 im Arbeitsraum verfahren zu werden.

In einer besonders bevorzugten Ausführungsform ist der erste Verschiebungsbereich derart festgelegt, dass dieser sich bei in der Ablagestation befindlichem Werkzeug von der Ablageposition P0 im Kabelführungsraum bis hin zur Übergabeposition P1 im Arbeitsraum erstreckt.

Die verfahrbare Ablagestation kann in vorteilhafte Weise zur Aufbewahrung des kabelgebundenen Werkzeugs bei Nichtverwendung und bei Bereitstellung an der Bearbeitungseinrichtung eingesetzte werden. Bei Nichtverwendung kann die Ablagestation mit darin befindlichem kabelgebundenem Werkzeug in die Ablageposition P0 verfahren werden, die sich vollständig im Kabelführungsraum befindet und vorzugsweise mit der steuerbaren Klappe vollständig vom Arbeitsraum abgetrennt werden kann. Zur Bereitstellung des kabelgebundenen Werkzeugs zwecks Aufnahme durch die Bearbeitungseinrichtung der Werkzeugmaschine kann die Ablagestation bei geöffneter Klappe durch die Öffnung bis hin zu einer Übergabeposition P1 im Arbeitsraum verfahren werden. In vorteilhafter Weise kann der erste Verschiebungsbereich derart festgelegt werden, dass während einer Verfahrbewegung der Ablagestation von der Ablageposition P0 bis hin zur Übergabeposition P1 das Anschlusskabel lediglich durch die Gewichtskraft des ersten Spanngewichts vorgespannt wird. Auf diese Weise kann eine durch die Vorspannung des Anschlusskabels auf das Werkzeug wirkende Kraft gering gehalten werden, um dieses aus der Ruheposition nicht zu verkippen oder zu verkeilen.

In einer besonders bevorzugten Ausführungsform sind die erste und/oder die zweite Führungsvorrichtung der Kabelführungsvorrichtung derart angeordnet, dass Verschiebungsrichtungen des in der ersten Führungsvorrichtung geführten Schlittens und/oder der in der zweiten Führungsvorrichtung geführten Spanngewichte G₁ und G₂ vertikal bzw. parallel zum Schwerefeld der Erde verlaufen.

Zur optimalen Ausnutzung der Gewichtskräfte der beiden Spanngewichte G₁ und G₂ können die beiden Führungsvorrichtungen parallel in Bezug auf das Schwerefeld der Erde angeordnet werden. Zudem kann so ein Risiko eines Verkeilens der Spanngewichte G₁ und G₂ sowie des Schlittens in den Führungsvorrichtungen minimiert werden. Weiterhin können die zur erste Umlenkrolle laufende bzw. die von der ersten Umlenkrolle kommenden Partien des Anschlusskabels ebenso parallel zum Schwerfeld der Erde ausgerichtet sein. So tritt in diesen Bereichen keine Durchbiegung des Anschlusskabels aufgrund dessen Eigengewichts auf.

In einer besonders bevorzugten Ausführungsform ist die Verbindung zwischen der Seilzugvorrichtung und dem in der ersten Führungsvorrichtung geführten Schlitten über ein elastisches oder ein viskoelastisches Element gestaltet.

Da Verfahrbewegungen der Bearbeitungseinrichtung der Werkzeugmaschine meist ruckartig oder schnell erfolgen, können durch ein zusätzliches elastisches oder viskoelastisches Element auch sich auf die Kabelführungsvorrichtung übertragende dynamische Effekte, wie beispielsweise unerwünschte Schwingungen der Spanngewichte, reduziert werden.

In einer besonders bevorzugten Ausführungsform umfasst die Kabelführungsvorrichtung neben den zwei Spanngewichten G₁ und G₂ weiterhin N zusätzliche Spanngewichte [ZG₁,...,ZGₙ,...,ZG_{N}] mit *N* ≥ 1 und 1 ≤ *n* ≤ *N*, die in der zweiten Führungsvorrichtung jeweils verschiebbar geführt sind, dergestalt, dass das über die erste Umlenkrolle laufende Anschlusskabel in einem (n+2)-ten Verschiebungsbereich der N+2 Verschiebungsbereiche des kabelgebunden Werkzeugs von einer durch eine Summe der Gewichtskräfte der Spanngewichte G₁, G₂ sowie ZG₁ bis ZGₙ erzeugten Kraft vorgespannt wird.

Die Erfindung ist demnach nicht auf ein Kabelführungsvorrichtung mit lediglich zwei Spanngewichten beschränkt, sondern kann durch den Einsatz weiterer zusätzlicher Spanngewichte vorteilhaft weitergebildet werden. Die Anzahl der zusätzlichen Spanngewichte wird durch N bezeichnet, wobei beispielsweise für den Fall N=0 zwei Spanngewichte in der zweiten Führungsvorrichtung angeordnet sind und für den Fall N=1 drei Spanngewichte usw; weist die Kabelführungsvorrichtung insgesamt fünf Spanngewichte auf, so werden diese mit G₁, G₂, ZG₁, ZG₂ und ZG₃ bezeichnet.

Durch den Einsatz mehrere Spanngewichte können in vorteilhafter Weise entsprechend viele Verschiebungsbereiche mit unterschiedlich starker Vorspannung des Anschlusskabels bereitgestellt werden. Je nach geometrischem Ausmaß der Werkzeugmaschine bzw. der Verfahrwege des von der Bearbeitungseinrichtung aufgenommenen kabelgebundenen Werkzeugs können so auch für verhältnismäßig große Distanzen des frei hängenden Anschlusskabels die nötigen Vorspannung realisiert werden, um eine zu starke, eigengewichtsbedingte Durchbiegung zu vermeiden.

Entsprechend der Ausführung mit N zusätzlichen Spanngewichten kann die zweite Führungsvorrichtung bis zu N zusätzliche Anschlagvorrichtungen [ZAG₁,...,ZAGₙ,...,ZAG_{N}] aufweisen, die Ausgangspositionen der zusätzlichen Spanngewichte [ZG₁,...,ZGₙ,...,ZG_{N}] bezüglich der zweiten Führungsvorrichtung festlegen und damit die weiteren N Verschiebungsbereiche definieren.

In einer besonders bevorzugten Ausführungsform weist die zweite Führungsvorrichtung eine Anschlagvorrichtung AG₁ für das erste Spanngewicht G₁ und eine Anschlagvorrichtung AG₂ für das zweite Spanngewicht G₂ auf, die Ausgangspositionen der Spanngewichte G₁ und G₂ bezüglich der zweiten Führungsvorrichtung festlegen und damit den ersten und den zweiten Verschiebungsbereich definieren.

In einer besonders bevorzugten Ausführungsform ist der in der ersten Führungsvorrichtung geführte Schlitten weiterhin über ein in Richtung der Verschiebungsrichtung des Schlittens wirkendes rückstellendes elastisches Element mit der Werkzeugmaschine verbunden.

Eine solches rückstellendes elastisches Element kann beispielsweise in Form einer Feder ausgeführt sein, die eine von der Verschiebung des Schlittens abhängige, auf den Schlitten selbst wirkende Rückstellkraft zur zusätzlichen Vorspannung des Anschlusskabels erzeugt. Zusätzlich zu den in den einzelnen Verschiebungsbereichen des kabelgebunden Werkzeugs konstanten, durch die Gewichtskräfte der Spanngewichte G₁ und G₂ bedingten Kräften wirkt auch die verschiebungsabhängige Rückstellkraft auf die Vorspannung des Anschlusskabels. Je nach Ausführung der Feder und deren spezifischer Federkennlinie (z.B. lineare Abhängigkeit oder polynomielle Abhängigkeit höheren Grades) können so beliebige stückweise stetige, polynomielle Vorspannungsverläufe für das Anschlusskabel in Abhängigkeit der Verschiebung des kabelgebundenen Werkzeugs bereitgestellt werden. Hierdurch kann der Verlauf der Vorspannung in den jeweiligen Verschiebungsbereichen optimal auf bestimmte Anwendungsfälle angepasst werden.

In einer besonders bevorzugten Ausführungsform ist die Bearbeitungseinrichtung der Werkzeugmaschine dazu ausgebildet, über drei als Linearachsen ausgeführte numerisch gesteuerte Maschinenachsen verfahren zu werden.

In einer besonders bevorzugten Ausführungsform weist die Werkzeugmaschine weiterhin zwei als Rundachsen ausgeführte, zueinander orthogonal oder schief stehende numerisch gesteuerte Maschinenachsen auf, die dazu ausgebildet sind, einen zum Tragen des Werkstücks eingerichteten Maschinentisch gegenüber der Bearbeitungseinrichtung zu orientieren.

Die Ausführung der erfindungsgemäßen Werkzeugmaschine mit drei Linearachsen zum Verfahren der Bearbeitungseinrichtung und zwei Rundachsen zur Orientierung des werkstücktragenden Maschinentischs. Die damit erzielten Positionierungs- und Orientierungsmöglichkeiten des zu bearbeitenden Werkstücks gegenüber der werkzeugtragenden Bearbeitungseinrichtung gestatten eine umfassende Bearbeitung des Werkstücks, ohne dieses jeweils neu auf dem Maschinentisch selbst ausrichten zu müssen.

In vorteilhafter Weise kann der Maschinentisch über die Rundachsen so orientiert werden, dass dieser eine Aufnahme und/oder Ablage des kabelgebundenen Werkezeugs in der dafür vorgesehenen, verfahrbar gestalteten Ablagestation nicht behindert.

Gemäß eines weiteren Aspekts der Erfindung wird eine Kabelführungsvorrichtung zur Bereitstellung und Führung eines flexiblen Anschlusskabels bereitgestellt, wobei die Kabelführungsvorrichtung eine erste Führungsvorrichtung, einen in der ersten Führungsvorrichtung verschiebbar geführten Schlitten, eine erste Umlenkrolle, die drehbar mit dem Schlitten verbunden ist, ein erstes Spanngewicht G₁ und eine Seilzugvorrichtung, die das erste Spanngewicht G₁ mit dem in der ersten Führungsvorrichtung geführten Schlitten verbindet, umfasst. Das flexible Anschlusskabel weist ein freies Ende und ein mit einer Anschlussvorrichtung verbundenes festes Ende auf und verläuft über die erste Umlenkrolle. Die Kabelführungsvorrichtung umfasst weiterhin ein zweites Spanngewicht G₂ und eine zweite Führungsvorrichtung, in der die Spanngewichte G₁ und G₂ jeweils verschiebbar geführt sind. Die Kabelführungsvorrichtung ist derart ausgebildet, dass das über die erste Umlenkrolle laufende Anschlusskabel in einem ersten Verschiebungsbereich des freien Endes von einer durch die Gewichtskraft von Spanngewicht G₁ erzeugten Kraft vorgespannt wird und in einem zweiten Verschiebungsbereich des freien Endes von einer durch eine Summe der Gewichtskräfte von Spanngewicht G₁ und Spanngewicht G₂ erzeugten Kraft vorgespannt wird.

Die erfindungsgemäße Kabelführungsvorrichtung ist keineswegs auf den Einsatz an einer numerisch gesteuerten Werkzeugmaschine limitiert, sondern kann zur Führung und Spannung verschiedenartiger Anschlusskabel eingesetzt werden, für die sich eine Vorspannung mit verschiedenen Kraftstufen als besonders vorteilhaft erweist. Die im nachfolgenden aufgelisteten Vorteile gelten ebenso auch auf die zuvor beschriebene Werkzeugmaschine mit Kabelführungsvorrichtung.

Die erfindungsgemäße Kabelführungsvorrichtung eignet sich unter anderem für den Einsatz an feststehenden und/oder mobilen Versorgungsstationen, die zur Verbindungsherstellung einer Versorgungsquelle mit einem Verbraucher über einen am freien Ende des Anschlusskabels spezifisch ausgebildeten Adapter ausgeführt sind. Das durch das Anschlusskabel geförderte Medium kann hierbei elektrisch, optisch oder materiell in Form von festen, flüssigen oder gasförmigen Substanzen sein. Als nicht beschränkende Beispiele hierfür seien Ladestationen zur elektrischen Energieversorgung von Fahrzeugen oder fahrzeugähnlichen Vorrichtungen, Zapf- oder Pumpstationen zur Versorgung eines Verbrauchers mit gasförmigem und/oder flüssigem Treibstoff oder Druckluftversorgungseinrichtungen für diverse Werkzeuge genannt.

Dabei kann die im ersten Verschiebungsbereich durch das erste Spanngewicht G₁ bewirkte Vorspannung des Anschlusskabels als Grundspannung in einem Ausgangszustand eingesetzt werden, z.B. bei einer Ausgangsposition des zur Verbindungsherstellung bereitgestellten Adapters. Diese Grundspannung gewährleistet eine konstante Position des Adapters sowie ein durchweg gleichmäßige Vorspannung im Anschlusskabel in genannter Ausgangsposition. Um die materielle Belastung des Anschlusskabels sowie der einzelnen Teile der Kabelführung in einer solchen Ausgangsposition gering zu halten und damit unter anderem deren Lebensdauer nicht unnötig zu beschneiden, kann die durch das erste Spanngewicht G₁ bewirkte Vorspannung verhältnismäßig gering gewählt werden.

Durch Auslenkung des freien Endes bzw. des Adapters mit dem Ziel einer Verbindungsherstellung mit einem Verbraucher ist in der Regel eine Anpassung der Vorspannung des Anschlusskabels nötig, da mit steigender Auslenkung des Kabelendes bzw. des Adapters die für die Ausgangsposition eingestellte Vorspannung meist nicht mehr ausreicht. So kann z.B. eine durch das Eigengewicht bedingte, groß ausfallende Durchbiegung des Anschlusskabels durch ein einzelnes Spanngewicht, in diesem Fall das erste Spanngewicht G₁, nicht zuverlässig verhindert werden, sodass der Gebrauch unhandlich sein kann und die gewünschte Funktion unnötig behindert wird.

Ein solches Szenario kann durch den im Rahmen der erfindungsgemäßen Vorrichtung vorgesehenen zusätzlichen Einsatz des zweiten Spanngewichts G₂ verhindert werden, da das Anschlusskabel bei dem beschriebenen Vorgang der Verbindungsherstellung in vorteilhafter Weise nicht nur mit Hilfe der Gewichtskraft des ersten Spanngewichts G₁ sondern mit Hilfe der Gewichtskräfte beider Spanngewichte G₁ und G₂ vorgespannt wird. Der zweite Verschiebungsbereich der erfindungsgemäßen Vorrichtung ist an die spezifischen Umstände anzupassen und schließt sich nach einer verhältnismäßig geringen Auslenkung des freien Endes bzw. des Adapters an den ersten Verschiebungsbereich an.

Im Gegensatz zu einem Einsatz einer auf einem Federrückzug basierten Vorspannung gestaltet sich die erfindungsgemäße Vorrichtung besonders vorteilhaft, da mit zunehmender Auslenkung/Verschiebung des freien Endes bzw. des Adapters sowohl im ersten als auch im zweiten Verschiebungsbereich jeweils konstante Vorspannungen im Anschlusskabel vorliegen. Dagegen erschwert beispielsweise ein Federrückzug mit einer in Abhängigkeit der Auslenkung ansteigenden Vorspannung des Anschlusskabels die meist durch eine Person ausgeführte Auslenkung des freien Endes/Adapters gerade bei großen Verschiebungswegen nur unnötig.

In einer besonders bevorzugten Ausführungsform umfasst die Kabelführungsvorrichtung weiterhin ein oder mehrere aufeinanderfolgende weitere Umlenkvorrichtungen, die dazu eingerichtet sind, das vom festen Ende an der Anschlussvorrichtung kommende, über die erste Umlenkrolle laufende Anschlusskabel umzulenken.

Die Umlenkung des Anschlusskabels über weitere Umlenkvorrichtung gewährleistet hierbei den Einsatz der Vorrichtung in verschiedenen Konfigurationen, sodass ein Auszugsrichtung des freien Endes des Anschlusskabels in verschiedene Raumrichtungen bzgl. der Kabelführungsvorrichtung verlaufen kann. Kommt beispielsweise die erfindungsgemäße Kabelführungsvorrichtung in einer oben beschriebenen Versorgungsstation zum Einsatz, so kann sich bei einer auf einer Grundfläche ebenerdigen Bereitstellung der Versorgungsstation eine parallel zur Grundfläche verlaufende Auszugsrichtung als vorteilhaft erweisen, wohingegen sich bei einer in einer Höhe über der Grundfläche bereitgestellte Versorgungsstation eine orthogonal zur Grundfläche verlaufende Auszugsrichtung als vorteilhaft erweisen kann.

In einer besonders bevorzugten Ausführungsform umfasst die Kabelführungsvorrichtung neben den zwei Spanngewichten G₁ (121) und G₂ (122) weiterhin N zusätzliche Spanngewichte [ZG₁,...,ZGₙ,...,ZG_{N}] mit N ≥ 1 und 1 ≤ *n* ≤ *N*, die in der zweiten Führungsvorrichtung jeweils verschiebbar geführt sind, dergestalt, dass das über die erste Umlenkrolle laufende Anschlusskabel in einem (n+2)-ten Verschiebungsbereich der N+2 Verschiebungsbereiche des kabelgebunden Werkzeugs von einer durch eine Summe der Gewichtskräfte der Spanngewichte G₁, G₂ sowie ZG₁ bis ZGₙ erzeugten Kraft vorgespannt wird.

Die erfindungsgemäße Kabelführungsvorrichtung ist demnach nicht auf den Einsatz mit lediglich zwei Spanngewichten beschränkt, sondern kann durch den Einsatz weiterer zusätzlicher Spanngewichte vorteilhaft weitergebildet werden. Die Anzahl der zusätzlichen Spanngewichte wird durch N bezeichnet, wobei beispielsweise für den Fall N=0 zwei Spanngewichte in der zweiten Führungsvorrichtung angeordnet sind und für den Fall N=1 drei Spanngewichte usw; weist die Kabelführungsvorrichtung insgesamt fünf Spanngewichte auf, so werden diese mit G₁, G₂, ZG₁, ZG₂ und ZG₃ bezeichnet.

Die so erzielten multiplen Verschiebungsbereiche mit unterschiedlich starker Vorspannung des Anschlusskabels können damit in vorteilhafter Weise auf die anwendungsspezifischen Auslenkungen des freien Endes angepasst werden.

Weitere Aspekte und deren Vorteile als auch speziellere Ausführungsmöglichkeiten der zuvor genannten Aspekte und Merkmale werden im Folgenden unter Zuhilfenahme der in den beigefügten Figuren gezeigten Zeichnungen beschrieben:
- Figur 1: zeigt eine Perspektivdarstellung einer zur laserbasierten Bearbeitung ausgeführten Werkzeugmaschine mit Ansicht des Arbeitsraums.
- Figur 2a: zeigt einen Ausschnitt der erfindungsgemäßen Werkzeugmaschine mit Darstellung der Kabelführungsvorrichtung ohne Darstellung des Anschlusskabels.
- Figur 2b: zeigt den entsprechend Figur 2a gleichen Aufbau der Kabelführungsvorrichtung an einer Seite der Werkzeugmaschine in einer alternativen Perspektive.
- Figur 3a: zeigt eine schematische Skizze eines Teils der Kabelführungsvorrichtung der mit einer durch die erste Umlenkrolle erfolgenden Vorspannung des Anschlusskabels mit Kennzeichnung der wirkenden Kräfte in einem Freischnitt.
- Figur 3b: zeigt in Ergänzung zur schematischen Darstellung des Aufbaus in Figur 3a einen beispielhaften Verlauf der durch die erste Umlenkrolle der Kabelführungsvorrichtung auf das Anschlusskabel wirkenden Vorspannung.
- Figur 4: zeigt eine reduzierte Darstellung eines Ausschnitts der Kabelführungsvorrichtung mit verfahrbarer Ablagestation für das kabelgebundenen Werkzeug.

Gleiche bzw. ähnliche Elemente in den Figuren können hierbei mit gleichen Bezugszeichen bezeichnet sein, manchmal allerdings auch mit unterschiedlichen Bezugszeichen.

Es wird hervorgehoben, dass die vorliegende Erfindung in keinster Weise auf die nachfolgend beschriebenen Ausführungsbeispiele und deren Ausführungsmerkmale begrenzt ist. Die Erfindung umfasst weiterhin Modifikationen der genannten Ausführungsbeispiele, insbesondere diejenigen, die aus Modifikationen und/oder Kombinationen einzelner oder mehrerer Merkmale der beschriebenen Ausführungsbeispiele im Rahmen des Schutzumfanges der unabhängigen Ansprüche hervorgehen.

### Ausführliche Figurenbeschreibung

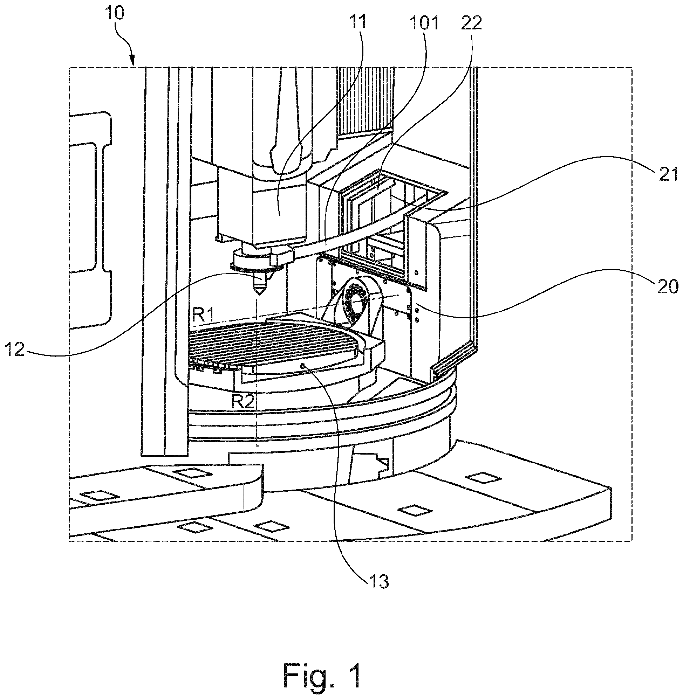

Figur 1 zeigt eine Perspektivdarstellung einer zur laserbasierten Bearbeitung ausgeführten, erfindungsgemäßen Werkzeugmaschine 10 mit Ansicht des Arbeitsraums.

Die Darstellung zeigt die numerisch gesteuerte Werkzeugmaschine 10 mit einer über drei Linearachsen verfahrbaren Bearbeitungseinrichtung 11, die ein kabelgebundenes Werkzeug 12, in diesem Fall ein zur Laserbearbeitung ausgeführtes Werkzeug, mit einem flexibel ausgeführten Anschlusskabel 101 trägt.

Die Bearbeitungseinrichtung 11 mit aufgenommenem Werkzeug 12 wird zur Bearbeitung eines auf dem Maschinentisch 13 befestigten Werkstücks (hier nicht dargestellt) eingesetzt, wobei der Maschinentisch 13 über die zwei orthogonal zueinander stehenden als Rundachsen ausgeführten Maschinenachsen R1 und R2 gegenüber der Bearbeitungseinrichtung 11 orientiert werden kann.

Die Ansicht zeigt den Arbeitsraum der Werkzeugmaschine 10, in dem die Bearbeitungen an dem am Maschinentisch 13 befestigten Werkstück erfolgen. Das Anschlusskabel 101 des kabelgebunden Werkzeugs 12 wird durch die in dieser Figur nicht gezeigte Kabelführungsvorrichtung 100 bereitgestellt und geführt, die im an den Arbeitsraum angrenzenden Kabelführungsraum hinter der Trennwand 20 angeordnet ist. Hierdurch sind sensible Maschinenteile der Kabelführungsvorrichtung 100 vor bei der Bearbeitung entstehenden Verunreinigungen geschützt.

Die Zuleitung des Anschlusskabels erfolgt durch die in die Trennwand 20 eingebrachte Öffnung 21, die im gezeigten Ausführungsbeispiel über die steuerbare Klappe 22, welche in Figur 1 im geöffneten Zustand dargestellt ist, verschlossen werden kann.

Im Fall einer Nichtverwendung des kabelgebundenen Werkzeugs 12 ist dieses vorteilhafter Weise im Kabelführungsraum angeordnet, der durch ein Verschließen der steuerbaren Klappe 22 vollständig vom Arbeitsraum abgetrennt werden kann.

Durch Einsatz der (hier nicht gezeigten) Kabelführungsvorrichtung 100 wird das Anschlusskabel bei Einsatz durch die Bearbeitungseinrichtung 11 gemäß des zweiten Verschiebungsbereich durch eine auf der Summe der Gewichtskräfte der beiden Spanngewichte G₁ 121 und G₂ 122 beruhenden Kraft vorgespannt, sodass eine durch das Eigengewicht bedingte Durchbiegung des Anschlusskabels 101 gemäß Darstellung in Figur 1 stark reduziert wird. Dadurch kann eine Behinderung der Werkstückbearbeitung durch das Anschlusskabel 101 oder gar eine Kollision des Anschlusskabels 101 mit weiteren Maschinenteilen der Werkzeugmaschine 10, beispielsweise dem Maschinentisch 13.

Weiterhin gestaltet sich eine Reduktion der Durchbiegung des Anschlusskabels dahingegen vorteilhaft, dass dadurch Beschädigungen des Anschlusskabels 101 selbst durch eine zu stark ausfallende Biegung vermieden werden können.

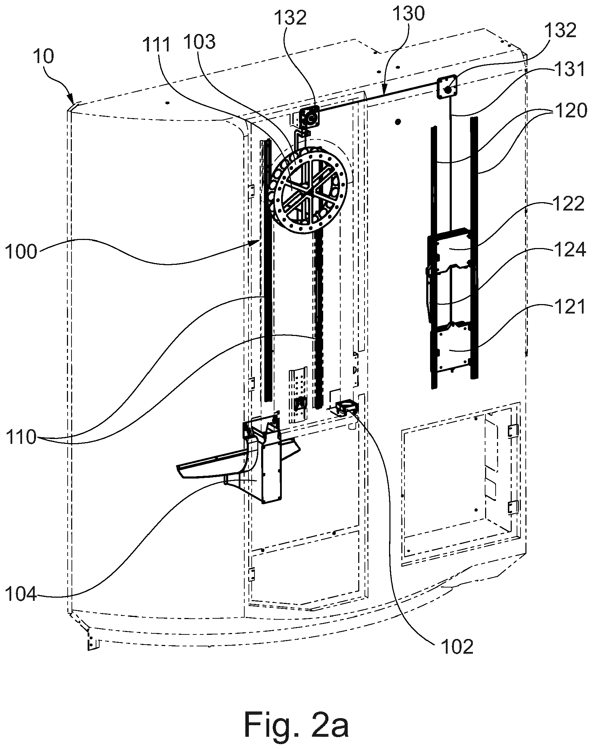

Figur 2a zeigt einen Ausschnitt der erfindungsgemäßen Werkzeugmaschine 10 mit Darstellung der Kabelführungsvorrichtung 100 ohne Darstellung des Anschlusskabels 101.

Die Darstellung zeigt die beiden Führungsvorrichtungen 110, 120, in denen jeweils der Schlitten 111 sowie die Spanngewichte G₁ 121 und G₂ 122 verschiebbar geführt sind. Die beiden Führungsvorrichtungen 110, 120 sind vertikal an einer Seite der Werkzeugmaschine 10 angeordnet, sodass Verschiebungsrichtungen der Spanngewichte G₁ 121 und G₂ 122 und des Schlittens 111 parallel zum Schwerefeld der Erde verlaufen. Zudem sind die beiden Führungsvorrichtungen 110, 120 im gezeigten Ausführungsbeispiel als parallel angeordnete Führungsschienen ausgeführt, um so eine optimale und möglichst widerstandsfreie Führung der Spanngewichte G₁ 121 und Gz 122 sowie des Schlittens zu gewährleisten.

Die Seilzugvorrichtung 130 weist im dargestellten Ausführungsbeispiel ein Verbindungsseil 131 sowie zwei Umlenkrollen 132 auf und verbindet den Schlitten 111 mit dem ersten Spanngewicht G₁ 121.

Das hier nicht gezeigte Anschlusskabel 101 verläuft ausgehend von der Anschlussvorrichtung 102 über die erste Umlenkrolle 103 und wird von der zweiten Umlenkvorrichtung 104 in den Arbeitsraum der Werkzeugmaschine 10 geleitet. Die zweite Umlenkvorrichtung 104 ist hierbei so gestaltet, dass das von der ersten Umlenkrolle 103 kommende, in diesem Abschnitt vertikal verlaufende Anschlusskabel 101 in einem annähernd kreisbogenförmigem Verlauf in den Arbeitsraum umgelenkt wird, wobei in diesem Fall ein minimaler Biegeradius des Anschlusskabels 101 von 200 mm nicht unterschritten wird. Die zweite Umlenkvorrichtung 104 weist hierbei einen oberseitig verjüngten Abschnitt auf, sodass das an dieser Stelle eintretende Anschlusskabel 101 möglichst positionsgenau in Empfang genommenen werden kann. Die zur Zuleitung dem Arbeitsraum zugewandte Seite der zweiten Umlenkvorrichtung weist eine sich öffnenden Form auf, um eine entsprechende Bewegungsfreiheit des kabelgebundenen Werkzeugs 12 bei Führung durch die Bearbeitungseinrichtung 11 zu gewährleisten.

Im Gegensatz zur ersten Umlenkrolle 103 ist die zweite Umlenkvorrichtung 104 nicht beweglich gestaltet. Das Anschlusskabel gleitet bei Bewegung über die Oberfläche der zweiten Umlenkvorrichtung, weshalb eine Materialpaarung zwischen zweiter Umlenkvorrichtung 104 und Anschlusskabel 101 mit möglichst geringem Reibungskoeffizienten zu bevorzugen ist.

Bei der in Figur 2a dargestellte Konfiguration der Kabelführungsvorrichtung 100 wirkt lediglich die Gewichtskraft des ersten Spanngewichts G₁ 121 über das Verbindungsseil 131 der Seilzugvorrichtung 130 auf den Schlitten 111 und damit auf die erste Umlenkrolle 103 zur Vorspannung des (hier nicht gezeigten) Anschlusskabels 101.

Das zweite Spanngewicht G₂ 122 liegt an der dafür ausgebildeten Anschlagvorrichtung AG₂ 124 an den Seiten der zweiten Führungsvorrichtung 120 an. Das zweite Spanngewicht G₂ 122 ist nicht mit dem Verbindungsseil 131 der Seilzugvorrichtung 130 verbunden, sodass sich in der gezeigten Konfiguration dessen Gewichtskraft nicht auf die Vorspannung des Anschlusskabels 101 auswirkt.

Wird das am Werkzeug 12 befindliche Ende des Anschlusskabels 101 zunehmend in Richtung des Arbeitsraum der Werkzeugmaschine ausgelenkt bzw. verschoben, so wird die erste Umlenkrolle 103 vertikal nach unten entlang der durch die erste Führungsvorrichtung 110 vorgegebenen Richtung nach unten gezogen.

Konsequenterweise wird durch die Seilzugvorrichtung 130 das erste Spanngewicht G₁ 121 entlang der durch die zweite Führungsvorrichtung 120 vorgegebenen Richtung nach oben gezogen. Bei zunehmender Verschiebung des ersten Spanngewichts G₁ 121 kontaktiert dieses am Übergang zwischen dem ersten und dem zweiten Verschiebungsbereich das ebenfalls in der zweiten Führungsvorrichtung 120 geführte zweite Spanngewicht G₂ 122. Die Kontaktflächen der beiden Spanngewichte G₁ 121 und G₂ 122 sind hierbei derart ausgeführt, dass bei weiter nach oben zunehmender Verschiebung des ersten Spanngewichts G₁ 121 auch das zweite Spanngewicht G₂ 122 mit verschoben wird. Eine Unterseite des zweiten Spanngewichts G₂ 122 ruht in diesem Fall auf einer Oberseite des ersten Spanngewichts G₁ 121. Als Konsequenz wirkt nun zusätzlich die Gewichtskraft des zweiten Spanngewichts G₂ 122 über den Kontakt mit dem ersten Spanngewicht G₁ 121 auf das Verbindungsseil 131 der Seilzugvorrichtung 130 und damit auf den mit der ersten Umlenkrolle 103 verbundenen Schlitten 111, sodass das darüber laufende Anschlusskabel 101 über eine auf der Summe der Gewichtskräfte der beiden Spanngewichte G₁ 121 und G₂ 122 beruhenden Kraft vorgespannt wird.

Entsprechend findet ein bei einer aus dem zweiten Verschiebungsbereich startenden Abwärtsbewegung des ersten und zweiten Spanngewichts G₁ 121 und G₂ 122 bei Erreichen der Anschlagvorrichtung AG₂ 124 ein Kontaktverlust zwischen den beiden Spanngewichten 121, 122 statt, sodass mit Übergang in den ersten Verschiebungsbereich wieder lediglich die vom ersten Spanngewicht G₁ 121 erzeugte Gewichtskraft zur Vorspannung des Anschlusskabels 101 eingesetzt wird.

Die Position der Anschlagvorrichtung AG₂ 124 kann hierbei zur Anpassung eines Übergangspunktes zwischen dem ersten und dem zweiten Verschiebungsbereich eingesetzt werden.

Es ist an dieser Stelle anzumerken, dass die Umsetzung der einzelnen Verschiebungsbereiche mit den unterschiedlichen Vorspannungen des Anschlusskabels 101, insbesondere deren Übergang ineinander, nicht auf die in diesem Ausführungsbeispiel dargelegte direkte Kontaktierung der Spanngewichte 121, 122 beschränkt ist. Die Vorspannung mit Hilfe mehrere Spanngewichte 121, 122 kann ebenso auch durch entsprechende fest an vorbestimmten Positionen des Verbindungsseils 131 der Seilzugvorrichtung 130 angebrachten Anschlägen umgesetzt werden, wobei das Verbindungsseil 131 an den Spanngewichten 121, 122 vorbei oder durch Aussparungen in den Spanngewichten 121, 122 hindurch geführt wird und es durch zunehmende Auslenkung des Verbindungsseils 131 zu einer Kontaktherstellung zwischen einem solchen Anschlag des Verbindungsseils 131 und einem der Spanngewichte 121, 122 kommt, sodass die Gewichtskraft des betreffenden Spanngewichts 121, 122 über den fest angebrachten Anschlag auf das Verbindungsseil 131 und damit auf den Schlitten 111 in der ersten Führungsvorrichtung 110 wirkt.

Darüber hinaus ist anzumerken, dass die Seilzugvorrichtung 130 keineswegs auf den in Figur 2a gezeigten Aufbau beschränkt ist, sondern ebenso in flaschenzugähnlicher Form angeordnet werden kann, um so verschiedene Übersetzungsverhältnisse zwischen den durch die Gewichtskräfte der Spanngewichte 121, 122 bedingten Kraft und der auf das Anschlusskabel 101 wirkenden Vorspannung zu erzielen.

Der in Figur 2a gezeigte Aufbau der Kabelführungsvorrichtung 100 lässt sich mit geringem Bauraum an einer Seite der Werkzeugmaschine 10 breitstellen und weist eine vergleichsweise niedrige Tiefe auf und ist daher äußerst platzsparend.

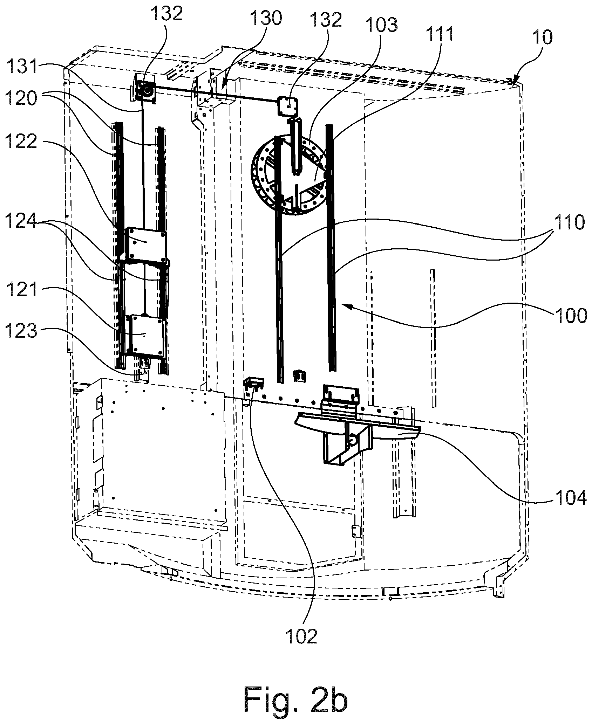

Figur 2b zeigt den entsprechend Figur 2a gleichen Aufbau der Kabelführungsvorrichtung 100 an einer Seite der Werkzeugmaschine 10 in einer alternativen Perspektive.

In Ergänzung zu der in Figur 2a gezeigten Perspektive ist in Figur 2b zusätzlich die Anschlagvorrichtung AG₁ 123 für das erste Spanngewicht G₁ 121 dargestellt.

Die Anschlagvorrichtung AG₁ 123 definiert eine Ausgangsposition des ersten Spanngewichts G₁ 121 und definiert damit den ersten Verschiebungsbereich der Kabelführungsvorrichtung 100, wobei zusätzlich ein Herausfallen des ersten Spanngewichts G₁ aus der ersten Führungsvorrichtung 110 verhindert wird. Dies erweist beispielsweise besonders vorteilhaft für Wartungs- und oder Montagearbeiten der Kabelführungsvorrichtung, da selbst bei zugfreiem oder nicht befestigtem Verbindungsseil 131 das Spanngewicht G₁ 121 nicht aus der Führung herausfallen kann.

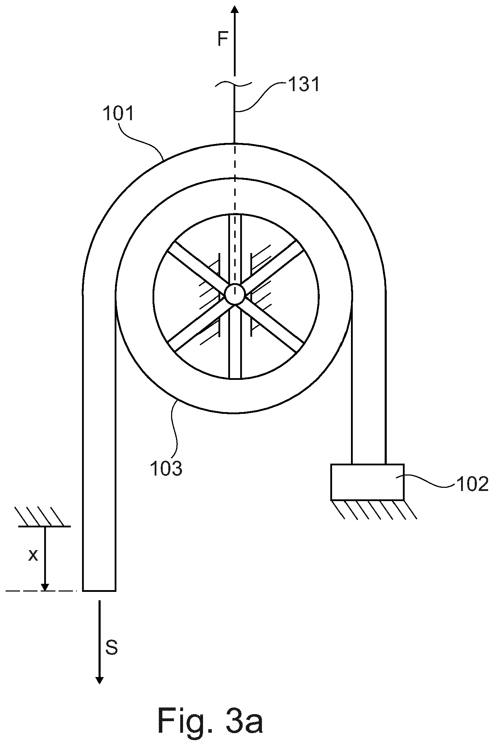

Weiterhin findet sich eine detaillierter Darstellung des in der ersten Führungsvorrichtung 110 geführten Schlittens 111. Dieser weist eine dreieckige Struktur auf und ist in der einen Führungsschiene der ersten Führungsvorrichtung 110 an zwei Stellen und in der anderen Führungsschiene der ersten Führungsvorrichtung 110 an einer Stelle verschiebbar gelagert, sodass ein Verkeilen des Schlittens 111 zuverlässig vermieden werden kann. Figur 3a zeigt eine schematische Skizze eines Teils der Kabelführungsvorrichtung 100 der mit einer durch die erste Umlenkrolle 103 erfolgenden Vorspannung des Anschlusskabels 101 mit Kennzeichnung der wirkenden Kräfte in einem Freischnitt.

Das von der Anschlussvorrichtung 102 der Werkzeugmaschine kommende Anschlusskabel 101 verläuft über die erste Umlenkrolle 103. Eine Verschiebung eines Punktes des Anschlusskabel 101 nach der ersten Umlenkrolle 103 wird mit x bezeichnet und gibt an, wie stark das Anschlusskabel 101 ausgelenkt wird. Die Umlenkrolle ist drehbar mit dem in Figur 3a nicht gezeigten Schlitten 111 verbunden, auf den wiederrum über ein Verbindungsseil 131 der Seilzugvorrichtung 130 durch die Spanngewichte G₁ und G₂ eine Kraft F zur Vorspannung des Anschlusskabels 101 ausgeübt wird; die Vorspannung ist in Figur 3a durch die Schnittkraft S gekennzeichnet. In dem in Figur 3a gezeigten Aufbau gilt der Zusammenhang S = 0.5 * F für die Schnittkraft S in Abhängigkeit der auf den Schlitten wirkenden Kraft F. Die Schnittkraft S wird hierbei als im Anschlusskabel wirkende Normalkraft interpretiert.

Durch eine Auslenkung x>0 wird die erste Umlenkrolle 103, auf die die Kraft F wirkt nach unten gezogen, wobei je nach Auslenkung x die Kraft F im ersten Verschiebungsbereich entweder auf der Gewichtskraft des ersten Spanngewichts G₁ 121 oder im zweiten Verschiebungsbereich auf der Summe der Gewichtskräfte der beiden Spanngewichte G₁ 121 und G₂ 122 beruht.

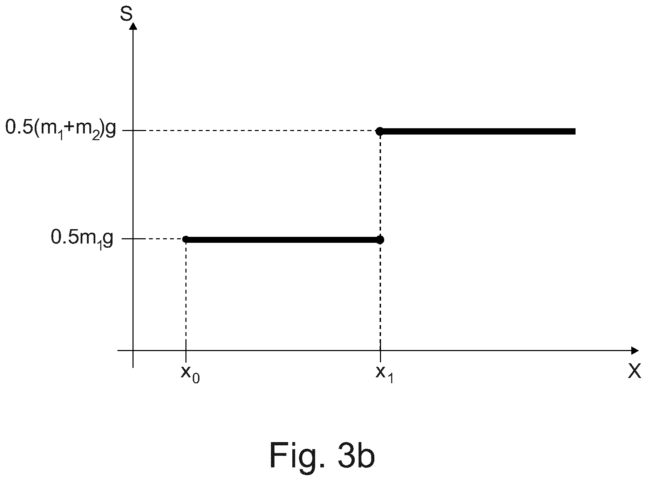

Figur 3b zeigt in Ergänzung zur schematischen Darstellung des Aufbaus in Figur 3a einen beispielhaften Verlauf der durch die erste Umlenkrolle 101 der Kabelführungsvorrichtung 100 auf das Anschlusskabel 101 wirkenden Vorspannung.

Die Massen der Spanngewichte G₁ 121 und G₂ 122 sind mit den Formelzeichen m₁ und m₂ bezeichnet und die Gravitationskonstante des Schwerefelds der Erde ist mit g bezeichnet. S bezeichnet die vorspannungsbeschreibende Schnittkraft im Anschlusskabel 101 und x dessen Auslenkungs- bzw. Verschiebungszustand.

Im gezeigten stückweise stetigen Verlauf liegt der erste Verschiebungsbereich im Bereich x₀<x<x₁ in dem eine Gewichtskraft von mig über die Seilzugvorrichtung 130 auf den Schlitten wirkt. Gemäß des im Zuge der Beschreibung von Figur 3a geschilderten Kraftzusammenhangs wird somit eine Schnittkraft S= 0.5 mig im Anschlusskabel erzielt.

Ab einer Auslenkung x=x₁ findet der Übergang vom ersten in den zweiten Verschiebungsbereich statt, infolgedessen für Auslenkungen x>x₁ die Vorspannung des Anschlusskabels 101 auf Basis der Summe der Gewichtskräfte der beiden Spanngewichte G₁ 121 und G₂ 122 erfolgt: S= 0.5(m₁g +m₂g).

Die genaue Position des Übergangspunkts x=x₁ kann unter anderem durch die Lage der Anschlagvorrichtungen AG₁ und AG₂ in der zweiten Führungsvorrichtungen 120 festgelegt werden,

In Bezug auf die Ausführungsform der Werkzeugmaschine 10 mit verfahrbarer Ablagestation 140 ist die Ablageposition P0 so zu wählen, dass diese im ersten Verschiebungsbereich mit x₀<x<x₁ liegt. Die Übergabeposition P1 zur Übergabe des kabelgebundenen Werkzeugs 12 an die Bearbeitungseinrichtung 11 ist vorzugsweise in nächster Nähe zum Übergangspunkt x=x₁ innerhalb des ersten Verschiebungsbereichs zu wählen.

Es ist hervorzuheben, dass die in Figur 3a und 3b aufgeführten physikalischen Zusammenhänge unter vereinfachenden Annahmen aufgestellt werden und beispielsweise Reibungseinflüsse oder Eigengewichte des Verbindungsseils 131 u.Ä. nicht berücksichtigt wurden, da die gezeigten Darstellung lediglich der funktionellen Beschreibung des Mechanismus dienen.

Auch wenn dies nicht explizit gezeigt ist, ergeben sich durch den Einsatz N zusätzlicher Spanngewichte (mit *N* ≥ 1) bei dem in Figur 3b gezeigten, stückweise stetigen Verlauf der Vorspannung zusätzlich zu den zwei gezeigten Vorspannungsstufen N weitere Vorspannungsstufen mit jeweiligem Verschiebungsbereich. Dabei fällt mit zunehmender Auslenkung die auf einer Vorspannungsstufe konstante angegebene Vorspannung größer aus als die Vorspannung in einer vorherigen Vorspannungsstufe. Hierdurch ergibt sich ein in Richtung steigender Auslenkungen treppenförmiger Vorspannungsverlauf mit N+2 (Vorspannungs-) Stufen.

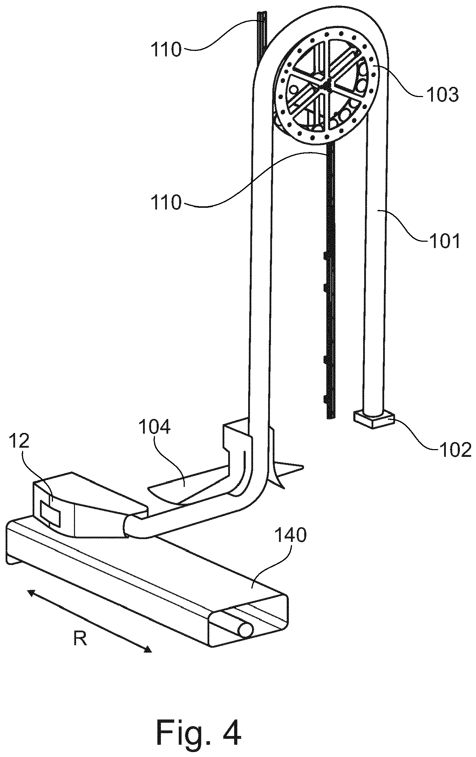

Figur 4 zeigt eine reduzierte Darstellung eines Ausschnitts der Kabelführungsvorrichtung 100 mit verfahrbarer Ablagestation 140 für das kabelgebundenen Werkzeug 12. Die Spanngewichte G₁ 121 und G₂ 122 sowie die Seilzugvorrichtung 130 sind in Figur 4 nicht dargestellt.

Das über die erste Umlenkrolle 103 und über die zweite Umlenkvorrichtung 104 laufende Anschlusskabel 101 verbindet die Anschlussvorrichtung 102 der Werkzeugmaschine 10 mit dem kabelgebundenen Werkzeug 12.

In der in Figur 4 gezeigten Darstellung ist das kabelgebundene Werkzeug 12 nicht von der Bearbeitungseinrichtung 11 aufgenommen sondern ist in der in Richtung R verfahrbar ausgeführten Ablagestation 140 der Werkzeugmaschine 10 angeordnet.

Zur Aufnahme des kabelgebundenen Werkzeugs 12 weist die Ablagestation 140 eine an eine Außenkontur des Werkzeugs 12 angepasste Aussparung auf einer Oberseite auf, in die das Werkzeug passgenau eingeführt werden kann.

Die Ablagestation 140 ist dazu eingerichtet, in Richtung R von einer Ablageposition P0 bis hin zu einer Übergabeposition P1 verfahren zu werden, um dort von der Bearbeitungseinrichtung 11 der Werkzeugmaschine aufgenommen zu werden, wobei die Verfahrrichtung R vorteilhafter Weise orthogonal zum Schwerefeld der Erde verläuft.

Die Ablagestation 140 ist derart positioniert, dass der von der zweiten Umlenkvorrichtung 104 kommende Abschnitt des Anschlusskabels 101 nahezu parallel oder zur Verfahrrichtung R verläuft. Konsequenterweise wirkt die vom Anschlusskabel 101 auf das kabelgebundene Werkzeug 12 wirkende Kraft nahezu parallel zur Verfahrrichtung R, sodass ein Verkeilen des Werkzeugs 12 in der Ablagestation vermieden werden kann. Ein Verkeilen wird zusätzlich dazu durch den erfindungsgemäßen Aufbau der Kabelführungsvorrichtung 100 der Werkzeugmaschine verhindert, da die Vorspannung des Anschlusskabels 101 bei in der Ablagestation befindlichem Werkzeug 12 vorzugsweise nur durch die Gewichtskraft des ersten Spanngewichts 121 erfolgt.

### Liste der Bezugszeichen

- 10: Werkzeugmaschine
- 11: Bearbeitungseinrichtung
- 12: kabelgebundenes Werkzeug
- 13: Maschinentisch
- 20: Trennwand
- 21: Öffnung in der Trennwand
- 22: Klappe

- 100: Kabelführungsvorrichtung
- 101: Anschlusskabel
- 102: Anschlussvorrichtung
- 103: erste Umlenkrolle
- 104: zweite Umlenkvorrichtung

- 110: erste Führungsvorrichtung
- 111: Schlitten

- 120: zweite Führungsvorrichtung
- 121: erstes Spanngewicht G₁
- 122: zweites Spanngewicht G₂
- 123: erste Anschlagvorrichtung AG₁ für erstes Spanngewicht G₁
- 124: zweite Anschlagvorrichtung AG₂ für erstes Spanngewicht G₂

- 130: Seilzugvorrichtung
- 131: Verbindungsseil
- 132: Umlenkrolle

- 140: Ablagestation

- S: Schnittkraft im Anschlusskabel
- F: Zugkraft der Seilzugvorrichtung
- R: Verfahrrichtung der Ablagestation

- R1: erste Rundachse
- R2: zweite Rundachse

## Patentansprüche

1. Eine numerisch gesteuerte Werkzeugmaschine (10) mit Kabelführungsvorrichtung (100) zur Bereitstellung und Führung eines flexibel ausgeführten Anschlusskabels (101) eines kabelgebundenen Werkzeugs (12), wobei die Werkzeugmaschine (10) zumindest umfasst:
eine Bearbeitungseinrichtung (11), die dazu ausgebildet ist, das kabelgebundene Werkzeug (12) aufzunehmen,
ein oder mehrere numerisch gesteuerte Maschinenachsen, die dazu ausgebildet sind, die Bearbeitungseinrichtung (11) und ein zu bearbeitendes
Werkstück relativ zueinander zu positionieren,
und die Kabelführungsvorrichtung (100) umfasst:
eine erste Führungsvorrichtung (110),
einen in der ersten Führungsvorrichtung (110) verschiebbar geführten Schlitten (111),
eine erste Umlenkrolle (103), die drehbar mit dem Schlitten (111) verbunden ist,
ein erstes Spanngewicht G₁ (121),
eine Seilzugvorrichtung (130), die das erste Spanngewicht G₁ (121) mit dem in der ersten Führungsvorrichtung (110) geführten Schlitten (111) verbindet,
wobei das Anschlusskabel (101) über die erste Umlenkrolle (103) läuft und das kabelgebundene Werkzeug (12) mit einer Anschlussvorrichtung (102) der Werkzeugmaschine (10) verbindet,
wobei,
die Kabelführungsvorrichtung (100) weiterhin umfasst:
ein zweites Spanngewicht G₂ (122) und
eine zweite Führungsvorrichtung (120), in der die Spanngewichte G₁ (121) und G₂ (122) jeweils verschiebbar geführt sind,
dergestalt, dass das über die erste Umlenkrolle (103) laufende Anschlusskabel (101) in einem ersten Verschiebungsbereich des kabelgebundenen Werkzeugs (12) von einer durch die Gewichtskraft des ersten Spanngewichts G₁ (121) erzeugten Kraft vorgespannt wird und
in einem zweiten Verschiebungsbereich des kabelgebundenen Werkzeugs (12) von einer durch eine Summe der Gewichtskräfte der Spanngewichte G₁ (121) und G₂ (122) erzeugten Kraft vorgespannt wird.

2. Werkzeugmaschine (10) nach Anspruch 1, **dadurch gekennzeichnet, dass** die zweite Führungsvorrichtung (120) eine erste Anschlagvorrichtungen AG₁ (123) für das erste Spanngewicht G₁ (121) und eine zweite Anschlagvorrichtung AG₂ (124) für das zweite Spanngewicht G₂ (122) aufweist, die jeweils Ausgangspositionen der Spanngewichte G₁ (121) und G₂ (122) bezüglich der zweiten Führungsvorrichtung (120) festlegen und damit den ersten und den zweiten Verschiebungsbereich definieren.

3. Werkzeugmaschine (10) nach einem der Ansprüche 1 oder 2, **dadurch gekennzeichnet, dass** das kabelgebundene Werkzeug (12) ein kabelgebundenes Laserwerkzeug zur laserbasierten Bearbeitung ist, und
das kabelgebundene Laserwerkzeug (12) zur additiven Laserbearbeitung ausgeführt ist, wobei das Anschlusskabel (101) des kabelgebundenen Laserwerkzeugs (12) im Inneren zumindest eine oder mehrere Zuleitungen für Pulvergemische zur additiven Laserbearbeitung und eine Leitungsfaser zur Laserführung aufweist.

4. Werkzeugmaschine (10) nach einem der vorherigen Ansprüche, **dadurch gekennzeichnet, dass** die Kabelführungsvorrichtung (100) derart ausgeführt ist, dass ein Biegeradius des Anschlusskabels (101) einen kabelspezifischen minimalen Biegeradius nicht unterschreitet.

5. Werkzeugmaschine (10) nach einem der vorherigen Ansprüche, **dadurch gekennzeichnet, dass** die Werkzeugmaschine (10) einen für Bearbeitungen am Werkstück ausgebildeten Arbeitsraum und einen an eine Seite des Arbeitsraums angrenzenden Kabelführungsraum aufweist, wobei der Kabelführungsraum und der Arbeitsraum durch eine mit einer Öffnung (21) versehenen Trennwand (20) voneinander abgetrennt sind und die im Kabelführungsraum angeordnete Kabelführungsvorrichtung (100) dazu ausgebildet ist, das Anschlusskabel (101) durch die Öffnung (21) der Trennwand (20) in den Arbeitsraum zu führen, und die Werkzeugmaschine weiterhin eine an der Öffnung (21) der Trennwand (20) angeordnete steuerbare Klappe (22) aufweist, die dazu ausgebildet ist, die Öffnung (21) der Trennwand (20) zu verschließen und zu öffnen.

6. Werkzeugmaschine (10) nach Anspruch 5, **dadurch gekennzeichnet, dass** die Kabelführungsvorrichtung (100) weiterhin eine zweite Umlenkvorrichtung (104) umfasst, die dazu eingerichtet ist, das von der Anschlussvorrichtung (102) kommende, über die erste Umlenkrolle (103) laufende Anschlusskabel (101) durch die Öffnung (21) der Trennwand (20) in den Arbeitsraum zu führen.

7. Werkzeugmaschine (10) nach einem der Ansprüche 5 oder 6, **dadurch gekennzeichnet, dass** die Werkzeugmaschine (10) weiterhin eine Ablagestation (140) umfasst, die dazu ausgebildet ist, das kabelgebundene Werkzeug (12) aufzunehmen.

8. Werkzeugmaschine (10) nach Anspruch 7, **dadurch gekennzeichnet, dass** die Ablagestation (140) für das kabelgebundene Werkzeug (12) verfahrbar gestaltet ist und dazu eingerichtet ist, durch die Öffnung (21) der Trennwand (20) zwischen einer Ablageposition P0 im Kabelführungsraum und einer Übergabeposition P1 im Arbeitsraum verfahren zu werden, und
der erste Verschiebungsbereich derart festgelegt ist, dass dieser sich bei in der Ablagestation (140) befindlichem Werkzeug (12) von der Ablageposition P0 im Kabelführungsraum bis hin zur Übergabeposition P1 im Arbeitsraum erstreckt.

9. Werkzeugmaschine (10) nach einem der vorherigen Ansprüche, **dadurch gekennzeichnet, dass** die erste und/oder die zweite Führungsvorrichtung (110, 120) der Kabelführungsvorrichtung (100) derart angeordnet sind, dass Verschiebungsrichtungen des in der ersten Führungsvorrichtung (110) geführten Schlittens (111) und/oder der in der zweiten Führungsvorrichtung (120) geführten Spanngewichte G₁ (121) und G₂ (122) vertikal bzw. parallel zum Schwerefeld der Erde verlaufen.

10. Werkzeugmaschine (10) nach einem der vorherigen Ansprüche, **dadurch gekennzeichnet, dass** die Verbindung zwischen der Seilzugvorrichtung (130) und dem in der ersten Führungsvorrichtung (110) geführten Schlitten (111) über ein elastisches oder ein viskoelastisches Element gestaltet ist, und/oder der in der ersten Führungsvorrichtung (110) geführte Schlitten (111) weiterhin über ein in Richtung der Verschiebungsrichtung des Schlittens (111) wirkendes rückstellendes elastisches Element mit der Werkzeugmaschine (10) verbunden ist.

11. Werkzeugmaschine (10) nach einem der vorherigen Ansprüche, **dadurch gekennzeichnet, dass** die Kabelführungsvorrichtung (100) neben den zwei Spanngewichten G₁ (121) und G₂ (122) weiterhin N zusätzliche Spanngewichte [ZG₁,...,ZGₙ,...,ZG_{N}] mit *N* ≥ 1 und 1 ≤ *n* ≤ *N* umfasst, die in der zweiten Führungsvorrichtung (120) jeweils verschiebbar geführt sind, dergestalt, dass das über die erste Umlenkrolle (103) laufende Anschlusskabel (101) in einem (n+2)-ten Verschiebungsbereich der N+2 Verschiebungsbereiche des kabelgebunden Werkzeugs (12) von einer durch eine Summe der Gewichtskräfte der Spanngewichte G₁ (121), G₂ (122) sowie ZG₁ bis ZGₙ erzeugten Kraft vorgespannt wird.

12. Werkzeugmaschine (10) nach einem der vorherigen Ansprüche, **dadurch gekennzeichnet, dass** die Bearbeitungseinrichtung (11) der Werkzeugmaschine (10) dazu ausgebildet ist, über drei als Linearachsen ausgeführte numerisch gesteuerte Maschinenachsen verfahren zu werden, und /oder die Werkzeugmaschine (10) weiterhin zwei als Rundachsen ausgeführte, zueinander orthogonal oder schief stehende numerisch gesteuerte Maschinenachsen aufweist, die dazu ausgebildet sind, einen zum Tragen des Werkstücks eingerichteten Maschinentisch (13) gegenüber der Bearbeitungseinrichtung (11) zu orientieren.

13. Eine Kabelführungsvorrichtung (100) zur Bereitstellung und Führung eines flexibel ausgeführten Anschlusskabels (101), wobei die Kabelführungsvorrichtung (100) umfasst:
eine erste Führungsvorrichtung (110),
einen in der ersten Führungsvorrichtung (110) verschiebbar geführten Schlitten (111),
eine erste Umlenkrolle (103), die drehbar mit dem Schlitten (111) verbunden ist,
ein erstes Spanngewicht G₁ (121),
eine Seilzugvorrichtung (130), die das erste Spanngewicht G₁ (121) mit dem
in der ersten Führungsvorrichtung (110) geführten Schlitten (111) verbindet, wobei das Anschlusskabel (101) ein freies Ende und ein mit einer Anschlussvorrichtung (102) verbundenes festes Ende aufweist und über die erste Umlenkrolle (103) verläuft,
wobei,
die Kabelführungsvorrichtung (100) weiterhin umfasst:
ein zweites Spanngewicht G₂ (122) und
eine zweite Führungsvorrichtung (120), in der die Spanngewichte G₁ (121) und G₂ (122) jeweils verschiebbar geführt sind,
dergestalt, dass das über die erste Umlenkrolle (103) laufende Anschlusskabel (101) in einem ersten Verschiebungsbereich des freien Endes von einer durch die Gewichtskraft des ersten Spanngewichts G₁ (121) erzeugten Kraft vorgespannt wird und
in einem zweiten Verschiebungsbereich des freien Endes von einer durch eine Summe der Gewichtskräfte der Spanngewichte G₁ (121) und G₂ (122) erzeugten Kraft vorgespannt wird.

14. Kabelführungsvorrichtung (100) nach Anspruch 13, **dadurch gekennzeichnet, dass** die Kabelführungsvorrichtung (100) weiterhin ein oder mehrere aufeinanderfolgende weitere Umlenkvorrichtungen (104) umfasst, die jeweils dazu eingerichtet sind, das vom festen Ende an der Anschlussvorrichtung (102) kommende, über die erste Umlenkrolle (103) laufende Anschlusskabel (101) umzulenken.

15. Kabelführungsvorrichtung (100) nach einem der Ansprüche 13 oder 14, **dadurch gekennzeichnet, dass** die Kabelführungsvorrichtung (100) neben den zwei Spanngewichten G₁ (121) und G₂ (122) weiterhin N zusätzliche Spanngewichte [ZG₁,...,ZGₙ,...,ZG_{N}] mit *N* ≥ 1 und 1 ≤ *n* ≤ *N* umfasst, die in der zweiten Führungsvorrichtung (120) jeweils verschiebbar geführt sind, dergestalt, dass das über die erste Umlenkrolle (103) laufende Anschlusskabel (101) in einem (n+2)-ten Verschiebungsbereich der N+2 Verschiebungsbereiche des kabelgebunden Werkzeugs (12) von einer durch eine Summe der Gewichtskräfte der Spanngewichte G₁ (121), G₂ (122) sowie ZG₁ bis ZGₙ erzeugten Kraft vorgespannt wird.

## Claims

1. A numerically controlled machine tool (10) with a cable guiding device (100) for providing and guiding a flexibly designed connection cable (101) of a cable-bound tool (12), wherein the machine tool (10) comprises at least:
a machining device (11) which is designed to receive the cable-bound tool (12),
one or more numerically controlled machine axes which are designed to position the machining device (11) and a workpiece to be machined relative to one another,
and the cable guiding device (100) comprises:
a first guiding device (110),
a carriage (111) guided displaceably in the first guiding device (110),
a first deflection roller (103) which is connected rotatably to the carriage (111),
a first clamping weight G₁ (121),
a cable pull device (130) which connects the first clamping weight G₁ (121) to the carriage (111) guided in the first guiding device (110),
wherein the connection cable (101) runs over the first deflection roller (103) and connects the cable-bound tool (12) to a connection device (102) of the machine tool (10),
wherein,
the cable guiding device (100) further comprises:
a second clamping weight G₂ (122), and
a second guiding device (120) in which the clamping weights G₁ (121) and G₂ (122) are each guided displaceably,
such that the connection cable (101) running over the first deflection roller (103) is prestressed in a first displacement region of the cable-bound tool (12) by a force generated by the weight force of the first clamping weight G₁ (121), and
is prestressed in a second displacement region of the cable-bound tool (12) by a force generated by a sum of the weight forces of the clamping weights G₁ (121) and G₂ (122).

2. Machine tool (10) according to Claim 1, **characterized in that** the second guiding device (120) has a first stop device AG₁ (123) for the first clamping weight G₁ (121) and a second stop device AG₂ (124) for the second clamping weight G₂ (122) which each define starting positions of the clamping weights G₁ (121) and G₂ (122) with respect to the second guiding device (120) and thus define the first and the second displacement region.

3. Machine tool (10) according to either of Claims 1 and 2, **characterized in that** the cable-bound tool (12) is a cable-bound laser tool for laser-based machining, and the cable-bound laser tool (12) is designed for additive laser machining, wherein the connection cable (101) of the cable-bound laser tool (12) has in the interior at least one or more feed lines for powder mixtures for additive laser machining and one conducting fiber for laser guiding.

4. Machine tool (10) according to one of the preceding claims, **characterized in that** the cable guiding device (100) is designed in such a way that a bending radius of the connection cable (101) does not fall below a cable-specific minimum bending radius.

5. Machine tool (10) according to one of the preceding claims, **characterized in that** the machine tool (10) has a working space designed for machining on the workpiece and a cable guiding space adjoining one side of the working space, wherein the cable guiding space and the working space are separated from one another by a partition wall (20) provided with an opening (21) and the cable guiding device (100) arranged in the cable guiding space is designed to guide the connection cable (101) through the opening (21) of the partition wall (20) into the working space, and
the machine tool further has a controllable flap (22) which is arranged at the opening (21) of the partition wall (20) and is designed to close and open the opening (21) of the partition wall (20).

6. Machine tool (10) according to Claim 5, **characterized in that** the cable guiding device (100) further comprises a second deflection device (104) which is set up to guide the connection cable (101) coming from the connection device (102) and running over the first deflection roller (103) through the opening (21) of the partition wall (20) into the working space.

7. Machine tool (10) according to either of Claims 5 and 6, **characterized in that** the machine tool (10) further comprises a storage station (140) which is designed to receive the cable-bound tool (12).

8. Machine tool (10) according to Claim 7, **characterized in that** the storage station (140) is designed to be movable for the cable-bound tool (12) and is set up to be moved through the opening (21) of the partition wall (20) between a storage position P0 in the cable guiding space and a transfer position P1 in the working space, and the first displacement region is defined in such a way that, when the tool (12) is located in the storage station (140), it extends from the storage position P0 in the cable guiding space as far as the transfer position P1 in the working space.

9. Machine tool (10) according to one of the preceding claims, **characterized in that** the first and/or the second guiding device (110, 120) of the cable guiding device (100) are arranged in such a way that displacement directions of the carriage (111) guided in the first guiding device (110) and/or of the clamping weights G₁ (121) and G₂ (122) guided in the second guiding device (120) run vertically or parallel to the earth's gravitational field.

10. Machine tool (10) according to one of the preceding claims, **characterized in that** the connection between the cable pull device (130) and the carriage (111) guided in the first guiding device (110) is designed via an elastic or a viscoelastic element, and/or the carriage (111) guided in the first guiding device (110) is further connected to the machine tool (10) via a restoring elastic element acting in the direction of the displacement direction of the carriage (111).

11. Machine tool (10) according to one of the preceding claims, **characterized in that,** in addition to the two clamping weights G₁ (121) and G₂ (122), the cable guiding device (100) further comprises N additional clamping weights [ZG₁,...,ZGₙ,...,ZG_{N}] with *N* ≥ 1 and 1 ≤ *n* ≤ *N* , which are each guided displaceably in the second guiding device (120), such that the connection cable (101) running over the first deflection roller (103) is prestressed in an (n+2)-th displacement region of the N+2 displacement regions of the cable-bound tool (12) by a force generated by a sum of the weight forces of the clamping weights G₁ (121), G₂ (122) and ZG₁ to ZGₙ.

12. Machine tool (10) according to one of the preceding claims, **characterized in that** the machining device (11) of the machine tool (10) is designed to be moved via three numerically controlled machine axes designed as linear axes, and/or
the machine tool (10) further has two numerically controlled machine axes designed as round axes, orthogonal to one another or oblique to one another, which are designed to orient a machine table (13) set up to carry the workpiece relative to the machining device (11).

13. A cable guiding device (100) for providing and guiding a flexibly designed connection cable (101), wherein the cable guiding device (100) comprises:
a first guiding device (110),
a carriage (111) guided displaceably in the first guiding device (110),
a first deflection roller (103) which is connected rotatably to the carriage (111),
a first clamping weight G₁ (121),
a cable pull device (130) which connects the first clamping weight G₁ (121) to
the carriage (111) guided in the first guiding device (110),
wherein the connection cable (101) has a free end and a fixed end connected to a connection device (102) and runs over the first deflection roller (103), wherein,
the cable guiding device (100) further comprises:
a second clamping weight G₂ (122), and
a second guiding device (120) in which the clamping weights G₁ (121) and G₂ (122) are each guided displaceably,
such that the connection cable (101) running over the first deflection roller (103) is prestressed in a first displacement region of the free end by a force generated by the weight force of the first clamping weight G₁ (121), and
is prestressed in a second displacement region of the free end by a force generated by a sum of the weight forces of the clamping weights G₁ (121) and G₂ (122).

14. Cable guiding device (100) according to Claim 13, **characterized in that** the cable guiding device (100) further comprises one or more successive further deflection devices (104) which are each set up to deflect the connection cable (101) coming from the fixed end on the connection device (102) and running over the first deflection roller (103).

15. Cable guiding device (100) according to either of Claims 13 and 14, **characterized in that,** in addition to the two clamping weights G₁ (121) and G₂ (122), the cable guiding device (100) further comprises N additional clamping weights [ZG₁,...,ZGₙ,...,ZG_{N}] with *N* ≥ 1 and 1 ≤ *n* ≤ *N* , which are each guided displaceably in the second guiding device (120), such that the connection cable (101) running over the first deflection roller (103) is prestressed in an (n+2)-th displacement region of the N+2 displacement regions of the cable-bound tool (12) by a force generated by a sum of the weight forces of the clamping weights G₁ (121), G₂ (122) and ZG₁ to ZGₙ.

## Revendications

1. Machine-outil à commande numérique (10) avec un dispositif de guidage de câble (100) pour la mise à disposition et le guidage d'un câble de raccordement flexible (101) d'un outil câblé (12), la machine-outil (10) comprenant au moins :
un dispositif d'usinage (11) qui est réalisé pour recevoir l'outil câblé (12),
un ou plusieurs axes de machine à commande numérique qui sont réalisés pour positionner le dispositif d'usinage (11) et une pièce à usiner l'un par rapport à l'autre,
et le dispositif de guidage de câble (100) comprenant :
un premier dispositif de guidage (110),
un chariot (111) guidé de manière déplaçable dans le premier dispositif de guidage (110),
une première poulie de renvoi (103) qui est connectée de manière rotative au chariot (111),
un premier poids de serrage G₁ (121),
un dispositif de câble de traction (130) qui connecte le premier poids de serrage G₁ (121) au chariot (111) guidé dans le premier dispositif de guidage (110),
dans laquelle le câble de raccordement (101) passe sur la première poulie de renvoi (103) et connecte l'outil câblé (12) à un dispositif de raccordement (102) de la machine-outil (10),
dans laquelle
le dispositif de guidage de câble (100) comprend en outre :
un deuxième poids de serrage G₂ (122), et
un deuxième dispositif de guidage (120) dans lequel les poids de serrage G₁ (121) et G₂ (122) sont guidés respectivement de manière déplaçable,
de telle sorte que le câble de raccordement (101) passant sur la première poulie de renvoi (103) soit précontraint dans une première plage de déplacement de l'outil câblé (12) par une force générée par la force de poids du premier poids de serrage G₁ (121), et
dans une deuxième plage de déplacement de l'outil câblé (12) par une force générée par une somme des forces de poids des poids de serrage G₁ (121) et G₂ (122).

2. Machine-outil (10) selon la revendication 1, **caractérisée en ce que** le deuxième dispositif de guidage (120) présente un premier dispositif de butée AG₁ (123) pour le premier poids de serrage G₁ (121) et un deuxième dispositif de butée AG₂ (124) pour le deuxième poids de serrage G₂ (122) qui fixent respectivement des positions de départ des poids de serrage G₁ (121) et G₂ (122) par rapport au deuxième dispositif de guidage (120) et définissent ainsi la première et la deuxième plage de déplacement.

3. Machine-outil (10) selon l'une quelconque des revendications 1 ou 2, **caractérisée en ce que** l'outil câblé (12) est un outil laser câblé pour l'usinage à base de laser, et l'outil laser câblé (12) est réalisé pour l'usinage laser additif, le câble de raccordement (101) de l'outil laser câblé (12) présentant à l'intérieur au moins une ou plusieurs conduites d'amenée pour des mélanges de poudre pour l'usinage laser additif et une fibre conductrice pour le guidage laser.

4. Machine-outil (10) selon l'une quelconque des revendications précédentes, **caractérisée en ce que** le dispositif de guidage de câble (100) est réalisé de telle sorte qu'un rayon de courbure du câble de raccordement (101) ne soit pas inférieur à un rayon de courbure minimal spécifique au câble.

5. Machine-outil (10) selon l'une quelconque des revendications précédentes, **caractérisée en ce que** la machine-outil (10) présente un espace de travail réalisé pour des usinages sur la pièce à usiner et un espace de guidage de câble adjacent à un côté de l'espace de travail, l'espace de guidage de câble et l'espace de travail étant séparés l'un de l'autre par une paroi de séparation (20) pourvue d'une ouverture (21) et le dispositif de guidage de câble (100) disposé dans l'espace de guidage de câble étant réalisé pour guider le câble de raccordement (101) à travers l'ouverture (21) de la paroi de séparation (20) dans l'espace de travail, et
la machine-outil présente en outre un clapet commandable (22) disposé au niveau de l'ouverture (21) de la paroi de séparation (20), qui est réalisé pour fermer et ouvrir l'ouverture (21) de la paroi de séparation (20).

6. Machine-outil (10) selon la revendication 5, **caractérisée en ce que** le dispositif de guidage de câble (100) comprend en outre un deuxième dispositif de renvoi (104) qui est conçu pour guider le câble de raccordement (101) provenant du dispositif de raccordement (102) et passant sur la première poulie de renvoi (103) à travers l'ouverture (21) de la paroi de séparation (20) dans l'espace de travail.

7. Machine-outil (10) selon l'une quelconque des revendications 5 ou 6, **caractérisée en ce que** la machine-outil (10) comprend en outre un poste de dépose (140) qui est réalisé pour recevoir l'outil câblé (12).

8. Machine-outil (10) selon la revendication 7, **caractérisée en ce que** le poste de dépose (140) pour l'outil câblé (12) est réalisé de manière déplaçable et est conçu pour être déplacé à travers l'ouverture (21) de la paroi de séparation (20) entre une position de dépose P0 dans l'espace de guidage de câble et une position de transfert P1 dans l'espace de travail, et
la première plage de déplacement est fixée de telle sorte que celle-ci s'étende, lorsque l'outil (12) se trouve dans le poste de dépose (140), de la position de dépose P0 dans l'espace de guidage de câble jusqu'à la position de transfert P1 dans l'espace de travail.

9. Machine-outil (10) selon l'une quelconque des revendications précédentes, **caractérisée en ce que** le premier et/ou le deuxième dispositif de guidage (110, 120) du dispositif de guidage de câble (100) sont disposés de telle sorte que des directions de déplacement du chariot (111) guidé dans le premier dispositif de guidage (110) et/ou des poids de serrage G₁ (121) et G₂ (122) guidés dans le deuxième dispositif de guidage (120) s'étendent verticalement ou parallèlement au champ de gravité de la terre.

10. Machine-outil (10) selon l'une quelconque des revendications précédentes, **caractérisée en ce que** la connexion entre le dispositif de câble de traction (130) et le chariot (111) guidé dans le premier dispositif de guidage (110) est réalisée par le biais d'un élément élastique ou viscoélastique, et/ou
le chariot (111) guidé dans le premier dispositif de guidage (110) est en outre connecté à la machine-outil (10) par le biais d'un élément élastique de rappel agissant dans la direction de la direction de déplacement du chariot (111).

11. Machine-outil (10) selon l'une quelconque des revendications précédentes, **caractérisée en ce que** le dispositif de guidage de câble (100) comprend en outre, en plus des deux poids de serrage G₁ (121) et G₂ (122), N poids de serrage supplémentaires [ZG₁,...,ZGₙ,...,ZG_{N}] avec *N* ≥ 1 et 1 ≤ *n* ≤ *N* qui sont guidés respectivement de manière déplaçable dans le deuxième dispositif de guidage (120), de telle sorte que le câble de raccordement (101) passant sur la première poulie de renvoi (103) soit précontraint dans une (n+2)-ième plage de déplacement des N+2 plages de déplacement de l'outil câblé (12) par une force générée par une somme des forces de poids des poids de serrage G₁ (121), G₂ (122) ainsi que ZG₁ à ZGₙ.

12. Machine-outil (10) selon l'une quelconque des revendications précédentes, **caractérisée en ce que** le dispositif d'usinage (11) de la machine-outil (10) est réalisé pour être déplacé par le biais de trois axes de machine à commande numérique réalisés sous forme d'axes linéaires, et/ou
la machine-outil (10) présente en outre deux axes de machine à commande numérique réalisés sous forme d'axes ronds, orthogonaux l'un à l'autre ou inclinés l'un par rapport à l'autre, qui sont réalisés pour orienter une table de machine (13) conçue pour supporter la pièce à usiner par rapport au dispositif d'usinage (11).

13. Dispositif de guidage de câble (100) pour la mise à disposition et le guidage d'un câble de raccordement flexible (101), le dispositif de guidage de câble (100) comprenant :
un premier dispositif de guidage (110),
un chariot (111) guidé de manière déplaçable dans le premier dispositif de guidage (110),
une première poulie de renvoi (103) qui est connectée de manière rotative au chariot (111),
un premier poids de serrage G₁ (121),
un dispositif de câble de traction (130) qui connecte le premier poids de serrage G₁ (121) au chariot (111) guidé dans le premier dispositif de guidage (110),
dans laquelle le câble de raccordement (101) présente une extrémité libre et une extrémité fixe connectée à un dispositif de raccordement (102) et s'étend sur la première poulie de renvoi (103),
dans lequel
le dispositif de guidage de câble (100) comprend en outre :
un deuxième poids de serrage G₂ (122), et
un deuxième dispositif de guidage (120) dans lequel les poids de serrage G₁ (121) et G₂ (122) sont guidés respectivement de manière déplaçable,
de telle sorte que le câble de raccordement (101) passant sur la première poulie de renvoi (103) soit précontraint dans une première plage de déplacement de l'extrémité libre par une force générée par la force de poids du premier poids de serrage G₁ (121), et
dans une deuxième plage de déplacement de l'extrémité libre par une force générée par une somme des forces de poids des poids de serrage G₁ (121) et G₂ (122).

14. Dispositif de guidage de câble (100) selon la revendication 13, **caractérisé en ce que** le dispositif de guidage de câble (100) comprend en outre un ou plusieurs dispositifs de renvoi supplémentaires successifs (104) qui sont conçus respectivement pour renvoyer le câble de raccordement (101) provenant de l'extrémité fixe au niveau du dispositif de raccordement (102) et passant sur la première poulie de renvoi (103).

15. Dispositif de guidage de câble (100) selon l'une quelconque des revendications 13 ou 14, **caractérisé en ce que** le dispositif de guidage de câble (100) comprend en outre, en plus des deux poids de serrage G₁ (121) et G₂ (122), N poids de serrage supplémentaires [ZG₁,...,ZGₙ,...,ZG_{N}] avec *N* ≥ 1 et 1 ≤ *n* ≤ *N* qui sont guidés respectivement de manière déplaçable dans le deuxième dispositif de guidage (120), de telle sorte que le câble de raccordement (101) passant sur la première poulie de renvoi (103) soit précontraint dans une (n+2)-ième plage de déplacement des N+2 plages de déplacement de l'outil câblé (12) par une force générée par une somme des forces de poids des poids de serrage G₁ (121), G₂ (122) ainsi que ZG₁ à ZGₙ.
